(19) Europäisches Patentamt
European Patent Office
Office européen des brevets

(11) EP 4 721 986 A1

(12) EUROPEAN PATENT APPLICATION

(43) Date of publication:
**08.04.2026 Bulletin 2026/15**

(21) Application number: **25206314.4**

(22) Date of filing: **02.10.2025**

(51) International Patent Classification (IPC):
***B41J 2/16*** *(2006.01)* ***C08G 59/62*** *(2006.01)*
***C08K 5/17*** *(2006.01)* ***C08L 63/00*** *(2006.01)*
***B41J 2/14*** *(2006.01)* ***C09J 163/00*** *(2006.01)*

(52) Cooperative Patent Classification (CPC):
**B41J 2/1623; B41J 2/14233; B41J 2/161; C08G 59/621; C08K 5/17; C08L 63/00; C09J 163/00;** B41J 2002/14362; B41J 2002/14419; B41J 2202/19

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.10.2024 JP 2024173299**

(71) Applicant: **Seiko Epson Corporation**
**Tokyo 160-8801 (JP)**

(72) Inventors:
- **KOGANEHIRA, Shuichi**
**Suwa-shi, 392-8502 (JP)**
- **TANAKA, Masako**
**Suwa-shi, 392-8502 (JP)**
- **TSUKADA, Kenta**
**Suwa-shi, 392-8502 (JP)**
- **YAMADA, Minoru**
**Suwa-shi, 392-8502 (JP)**

(74) Representative: **Lewis Silkin LLP**
**Arbor**
**255 Blackfriars Road**
**London SE1 9AX (GB)**

# (54) LIQUID EJECTING HEAD AND TWO-LIQUID MIXED GLUE

(57) A liquid ejecting head is a liquid ejecting head configured to eject a liquid from a nozzle, including a first member, a second member, and a cured substance of a two-liquid mixed glue that bonds the first member and the second member, in which the two-liquid mixed glue includes a liquid A containing a main agent that contains an epoxy resin containing no bisphenol, a liquid B containing at least one of 2,5-bis(aminomethyl)bicyclo[2.2.1]heptane and 2,6-bis(aminomethyl)bicyclo[2.2.1]heptane, and an alkylphenol, and a polymer of an aromatic amine contained in the liquid A or the liquid B, and the alkylphenol is an alkylphenol (a) containing at least one ethyl group or an alkylphenol (b) in which an alkyl group has 1 to 3 carbon atoms and which contains at least one methyl group and one isopropyl group.

FIG. 1

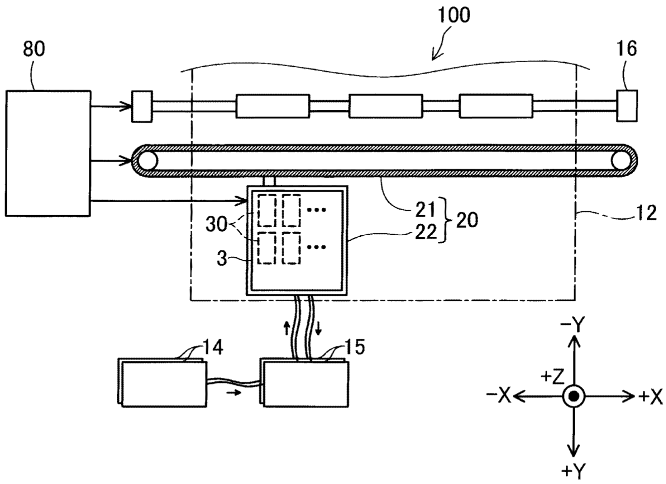




EP 4 721 986 A1

## Description

The present application is based on, and claims priority from JP Application Serial Number 2024-173299, filed October 2, 2024, the disclosure of which is hereby incorporated by reference herein in its entirety.

## BACKGROUND

### 1. Technical Field

The present disclosure relates to a liquid ejecting head and a two-liquid mixed glue.

### 2. Related Art

In the related art, a resin material is used for producing a liquid ejecting head. For example, JP-A-2017-35809 describes that a sealing agent which is a resin material is used for sealing an electrical coupling portion between a recording element substrate including a discharge energy generating element that discharges a liquid and an electrical wiring member for transmitting a signal to the recording element substrate. JP-A-2017-35809 describes that in the sealing agent, a bisphenol type epoxy resin can be used as a main agent, and an aliphatic amine can be used as a curing agent. In addition, JP-A-2017-35809 describes specific examples in which the resin material is used as a sealing agent, but the applications of such a resin material are not limited to a sealing agent, and the resin material can also be used, for example, as a glue.

Meanwhile, a glue used for a liquid ejecting head is required to have high liquid resistance such as acid resistance with respect to a liquid to be ejected and to be rapidly cured so that the glue, which is applied to bond members constituting the liquid ejecting head to each other, does not move from a position where the glue is applied during curing at a high temperature.

However, in an epoxy glue of the related art, a highly reactive bisphenol type epoxy resin is used as a main agent, and a highly reactive aliphatic amine is used as a curing agent, and thus, the acid resistance is insufficient even though the epoxy glue has rapid curability. Further, bisphenol is not preferable from the viewpoint of the environmental load.

As described above, there is a demand for a glue that reduces the environmental load, has high acid resistance, and is rapidly cured so that the glue, which is applied to bond members constituting a liquid ejecting head to each other, does not move from a position where the glue is applied during curing at a high temperature. Therefore, the same problem exists for members that are required to satisfy the same requirements as described above, other than the liquid ejecting head.

## SUMMARY

According to an aspect of the present disclosure, there is provided a liquid ejecting head that ejects a liquid from a nozzle. The liquid ejecting head includes a first member; a second member; and a cured substance of a two-liquid mixed glue that bonds the first member and the second member, in which the two-liquid mixed glue includes a liquid A containing a main agent that contains an epoxy resin containing no bisphenol, a liquid B containing at least one of 2,5-bis(aminomethyl)bicyclo[2.2.1]heptane and 2,6-bis(aminomethyl)bicyclo[2.2.1]heptane, and an alkylphenol, and a polymer of an aromatic amine contained in the liquid A or the liquid B, and the alkylphenol is an alkylphenol (a) containing at least one ethyl group or an alkylphenol (b) in which an alkyl group has 1 to 3 carbon atoms and which contains at least one methyl group and one isopropyl group.

## BRIEF DESCRIPTION OF THE DRAWINGS

FIG. 1 is a schematic view showing a schematic configuration of a liquid ejecting apparatus according to an embodiment.
FIG. 2 is a perspective view showing a head module.
FIG. 3 is an exploded perspective view showing a liquid ejecting head.
FIG. 4 is a cross-sectional view taken along line IV-IV of FIG. 3.
FIG. 5 is a cross-sectional view showing an ejecting unit.
FIG. 6 is a table showing a list of components used in tests.
FIG. 7 is a table showing Chemical Formulae (f1) to (f3).
FIG. 8 is a view for explaining Evaluation A.

FIG. 9 is a view for explaining Evaluation B.
FIG. 10 is a table showing equivalent ratios and mass ratios of Test 1.
FIG. 11 is a table showing evaluation results of each of Tests 1 to 3.
FIG. 12 is a table showing equivalent ratios and mass ratios of Test 2.
FIG. 13 is a table showing equivalent ratios and mass ratios of Test 3.
FIG. 14 is a table showing equivalent ratios and mass ratios of Test 4.
FIG. 15 is a table collectively showing evaluation results of Tests 4 to 7.
FIG. 16 is a table showing equivalent ratios and mass ratios of Test 5.
FIG. 17 is a table showing equivalent ratios and mass ratios of Test 6.
FIG. 18 is a table showing equivalent ratios and mass ratios of Test 7.
FIG. 19 is a table showing equivalent ratios and mass ratios of Test 8.
FIG. 20 is a table collectively showing evaluation results of Tests 8 to 11.
FIG. 21 is a table showing equivalent ratios and mass ratios of Test 9.
FIG. 22 is a table showing equivalent ratios and mass ratios of Test 10.
FIG. 23 is a table showing equivalent ratios and mass ratios of Test 11.
FIG. 24 is a table showing equivalent ratios and mass ratios of Test 12.
FIG. 25 is a table collectively showing evaluation results of Tests 12 and 13.
FIG. 26 is a table showing equivalent ratios and mass ratios of Test 13.

## DESCRIPTION OF EMBODIMENTS

### A. Embodiment:

### A1. Overall configuration of liquid ejecting apparatus:

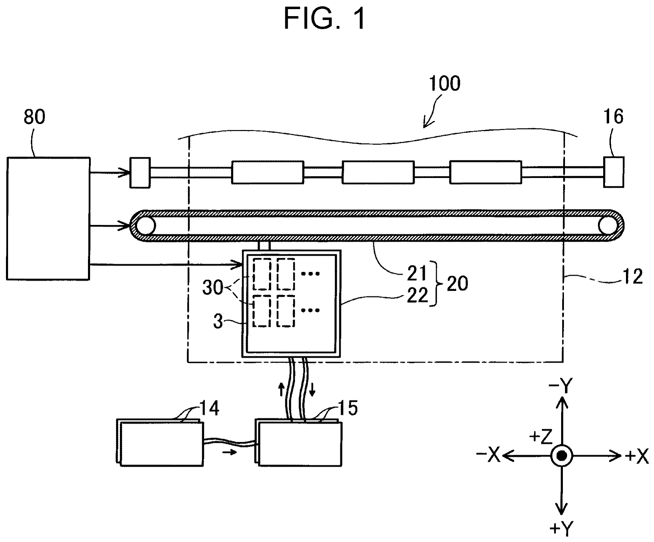

FIG. 1 is a schematic view showing a schematic configuration of a liquid ejecting apparatus 100 according to an embodiment. The liquid ejecting apparatus 100 is an ink jet type printing device that performs printing by ejecting ink droplets as a liquid onto a medium 12. A printing target made of any material such as a resin film or cloth can be employed as the medium 12 in addition to printing paper. In the following description, an X direction, a Y direction, and a Z direction that are orthogonal to each other are used. Further, when the orientation is specified, the positive direction is defined as "+" and the negative direction is defined as "-", and the positive and negative signs are used in combination in the direction notation. In the present embodiment, the X direction is a main scanning direction which is a moving direction of a liquid ejecting head 30. The Y direction is a sub-scanning direction which is a medium feeding direction orthogonal to the main scanning direction. The -Z direction is an ejection direction of an ink. In the following description, the +Z direction may be referred to as upward, and the -Z direction may be referred to as downward.

The liquid ejecting apparatus 100 includes a head module 3, a head moving mechanism 20, a plurality of liquid accommodating portions 14, a plurality of sub-tanks 15, a transport mechanism 16, and a controller 80. The head module 3 has a plurality of liquid ejecting heads 30.

Each liquid accommodating portion 14 accommodates an ink to be supplied to the head module 3. As the liquid accommodating portion 14, a bag-shaped liquid pack formed of a flexible film, an ink tank that can replenish an ink, a detachable ink cartridge, and the like can be used.

An aqueous pigment ink, a solvent ink, a UV-curable ink, or the like can be used as the ink. Further, when cloth is used as the medium 12, an acidic pretreatment ink containing an organic acid such as citric acid, malic acid, or malonic acid may be used as the ink. When the pretreatment ink is discharged onto cloth, the pretreatment ink reacts with an ink of a coloring material to be discharged thereafter and specifically, causes aggregation of a dye or pigment which is the coloring material. Therefore, the pretreatment ink has an effect of suppressing penetration of the ink of the coloring material and suppressing bleeding of the coloring material.

Each of the sub-tanks 15 is coupled to the liquid accommodating portion 14 by a tube through which the ink is circulated. In addition, each of the sub-tanks 15 is coupled to the head module 3 by a first tube for supplying ink to the head module 3 and a second tube for returning the ink from the liquid ejecting head 30 to the sub-tank 15. The ink is supplied to each of the sub-tanks 15 from the liquid accommodating portion 14, and the ink is returned from the head module 3. Further, the ink circulates between the sub-tank 15 and the head module 3.

In the following description, a case where the liquid ejecting apparatus 100 includes two liquid accommodating portions 14 and two sub-tanks 15 will be described as an example. In the present embodiment, inks of different colors are accommodated in each of the two liquid accommodating portions 14. In order to distinguish between these two inks, the ink accommodated in one liquid accommodating portion 14 is referred to as a first ink, and the ink accommodated in the other liquid accommodating portion 14 is referred to as a second ink. Further, the liquid ejecting apparatus 100 may include one or three or more liquid accommodating portions 14. In addition, the inks accommodated in each of the two liquid

accommodating portions 14 may be inks of the same color.

The head module 3 has a plurality of nozzles N (described below) for ejecting the ink. The head module 3 ejects the inks to be supplied from the liquid accommodating portions 14 from the plurality of nozzles N toward the medium 12.

The head moving mechanism 20 includes a transport belt 21 and a carriage 22 that accommodates the head module 3. The carriage 22 is coupled to the transport belt 21 and reciprocates in the X direction as the transport belt 21 is driven. The transport mechanism 16 transports the medium 12 in the +Y direction.

The controller 80 includes processing circuits such as one or a plurality of central processing units (CPUs) and field programmable gate arrays (FPGAs) and storage circuits such as a semiconductor memory, and controls the operation of the entire liquid ejecting apparatus 100. The controller 80 is electrically coupled to the transport mechanism 16, the head moving mechanism 20, and the liquid ejecting head 30, and controls each section. An image is printed on the medium 12 by ejecting the liquid from the nozzles N to the medium 12 transported by the transport mechanism 16.

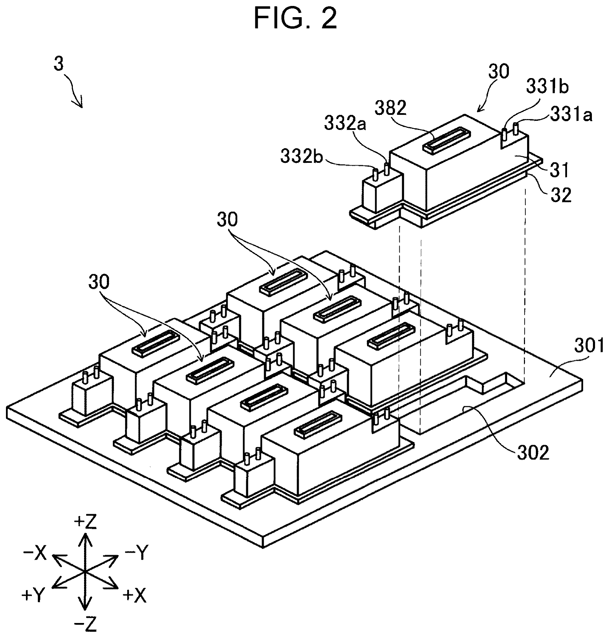

FIG. 2 is a perspective view showing the head module 3. As shown in FIG. 2, the head module 3 includes a support 301 and a plurality of the liquid ejecting heads 30. In the present embodiment, the head module 3 includes eight liquid ejecting heads 30. Further, the number of liquid ejecting heads 30 included in the head module 3 is not limited to eight, and may be, for example, one.

The support 301 is a plate-shaped member that supports the plurality of liquid ejecting heads 30. The support 301 has a plurality of mounting holes 302. Each liquid ejecting head 30 is supported by the support 301 in a state of being fitted in the mounting hole 302. The plurality of liquid ejecting heads 30 are arranged in a matrix.

A2. Configuration of liquid ejecting head:

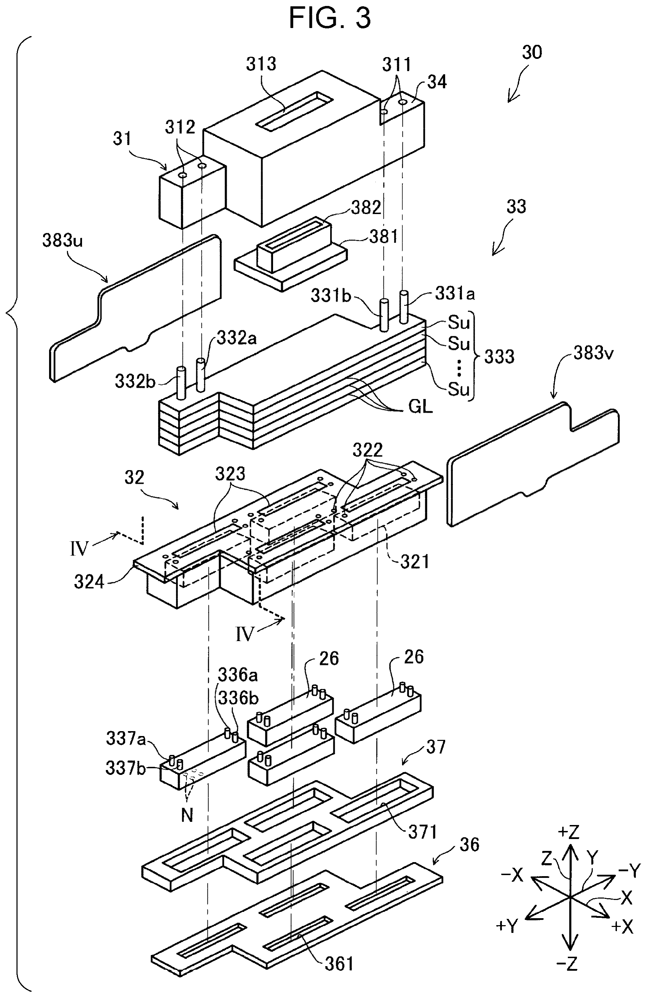

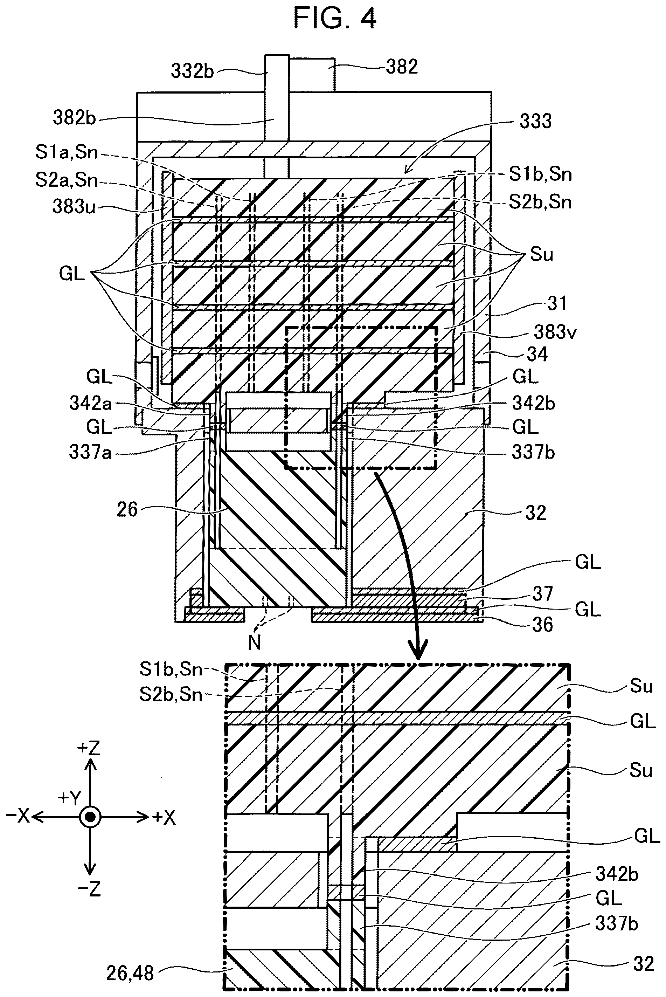

FIG. 3 is an exploded perspective view showing the liquid ejecting head 30. FIG. 4 is a cross-sectional view taken along line IV-IV of FIG. 3. The line IV-IV passes through the center of a holder first through-hole 322 described below. As shown in FIG. 3, the liquid ejecting head 30 includes a cover member 31, a holder member 32, a flow path structure 33, a fixing plate 36, a reinforcing plate 37, a plurality of ejecting units 26, a wiring substrate 381, a wiring member 382, a first circuit substrate 383u, and a second circuit substrate 383v. In the present embodiment, the liquid ejecting head 30 has four ejecting units 26.

The fixing plate 36 is a plate member for fixing the plurality of ejecting units 26 to the holder member 32. In the present embodiment, the material of the fixing plate 36 is stainless steel. The fixing plate 36 has a plurality of opening portions 361 for exposing the nozzles N formed at the lower surface of each ejecting unit 26.

The reinforcing plate 37 is a plate member for reinforcing the fixing plate 36. In the present embodiment, the material of the reinforcing plate 37 is stainless steel. The reinforcing plate 37 is fixed to the fixing plate 36 by a cured substance GL of a glue described below. Similar to the fixing plate 36, the reinforcing plate 37 has a plurality of opening portions 371 for exposing the nozzles N formed at the lower surface of each ejecting unit 26.

The ejecting unit 26 includes the nozzles N, a case first supply pipe 336a, a case first discharge pipe 337a, a case second supply pipe 336b, and a case second discharge pipe 337b. The details of the ejecting unit 26 will be described below.

The holder member 32 includes a plurality of accommodating portions 321, a plurality of holder first through-holes 322, and a plurality of holder second through-holes 323. The material of the holder member 32 is, for example, a metal such as stainless steel. Each of the accommodating portions 321 is formed to protrude downward from a plate-shaped flange 324 of the holder member 32. The lower side of each accommodating portion 321 is open. Each accommodating portion 321 accommodates the ejecting unit 26. Each holder first through-hole 322 is a through-hole for inserting any of the case first supply pipe 336a, the case first discharge pipe 337a, the case second supply pipe 336b, and the case second discharge pipe 337b of the ejecting unit 26. Each holder second through-hole 323 is a through-hole for inserting a flexible substrate 51a described below.

The flow path structure 33 includes a laminate 333, an upper coupling portion 331a for first supply, an upper coupling portion 332a for first discharge, an upper coupling portion 331b for second supply, and an upper coupling portion 332b for second discharge. The laminate 333 is configured by laminating a plurality of flow path members Su. Each flow path member Su communicates with the nozzle and defines a structure flow path Sn described below, which is a flow path through which the liquid flows.

As shown in FIG. 4, the laminate 333 is configured such that two adjacent flow path members Su of the plurality of flow path members Su are bonded to each other by the cured substance GL of a glue. In the present embodiment, the material of each flow path member Su is a resin.

The laminate 333 is formed with a structure flow path Sn for circulating the ink between the sub-tank 15 and the ejecting unit 26. The structure flow path Sn includes a laminate first supply flow path S1a, a laminate first discharge flow path S2a, a laminate second supply flow path S1b, and a laminate second discharge flow path S2b. The laminate first supply flow path S1a and the laminate first discharge flow path S2a are flow paths for circulating the first ink. The laminate second supply flow path S1b and the laminate second discharge flow path S2b are flow paths for circulating the second ink.

The laminate first supply flow path S1a and the laminate second supply flow path S1b are flow paths through which the ink flows from the sub-tank 15 toward the ejecting unit 26. The laminate first discharge flow path S2a and the laminate second discharge flow path S2b are flow paths through which the ink flows from the ejecting unit 26 toward the sub-tank 15.

Each structure flow path Sn is configured by a groove formed at an upper surface or a lower surface of each flow path member Su and a through-hole penetrating in a thickness direction of each flow path member Su. Further, FIG. 4 shows the structure flow path Sn in a simplified manner.

As shown in FIG. 3, the upper coupling portion 331a for first supply, the upper coupling portion 332a for first discharge, the upper coupling portion 331b for second supply, and the upper coupling portion 332b for second discharge are provided on the upper surface of the laminate 333. Each of the upper coupling portion 331a for first supply, the upper coupling portion 332a for first discharge, the upper coupling portion 331b for second supply, and the upper coupling portion 332b for second discharge is coupled to each of the laminate first supply flow path S1a, the laminate first discharge flow path S2a, the laminate second supply flow path S1b, and the laminate second discharge flow path S2b.

The wiring substrate 381 and the wiring member 382 are mounting components for electrically coupling the controller 80 and the ejecting unit 26. The wiring substrate 381 is formed with a wiring or the like. The wiring member 382 is a connector to which a signal cable (not shown) is coupled. Electronic circuits are formed at the first circuit substrate 383u and the second circuit substrate 383v. The first circuit substrate 383u and the second circuit substrate 383v are electrically coupled to the wiring substrate 381.

The cover member 31 accommodates a laminate 333, a wiring substrate 381, a wiring member 382, a first circuit substrate 383u, and a second circuit substrate 383. As the material of the cover member 31, for example, a resin or a metal can be used. The cover member 31 has two holes 311 for a first coupling portion, two holes 312 for a second coupling portion, and a first hole 313. The first hole 313 is a hole for inserting the wiring member 382. The upper coupling portion 331a for first supply or the upper coupling portion 331b for second supply is inserted into each of the two holes 311 for a first coupling portion. The upper coupling portion 332a for first discharge or the upper coupling portion 332b for second discharge is inserted into each of the two holes 312 for a second coupling portion.

Further, the material of the cover member 31 and the material of the holder member 32 are not limited to the description above. For example, the material of the holder member 32 may be a resin. Further, the material of the cover member 31 or the material of the holder member 32 may be, for example, carbon steel or a material obtained by combining a resin and a metal.

As shown in FIG. 4, the laminate 333, the wiring member 382, the first circuit substrate 383u, and the second circuit substrate 383v are accommodated inside the cover member 31. The ejecting unit 26 is accommodated inside the holder member 32. Further, the fixing plate 36 and the reinforcing plate 37 are disposed on the lower side of the holder member 32. The reinforcing plate 37, the fixing plate 36, and the holder member 32 are bonded to each other by the cured substance GL of a glue. The ejecting unit 26 is fixed to the holder member 32 by bonding the fixing plate 36 that supports the ejecting unit 26 from below and the holder member 32 to each other. The cover member 31 accommodating each of the above-described components and the holder member 32 accommodating each of the above-described components are coupled to each other to assemble the liquid ejecting head 30.

The flow path structure 33 further includes a lower coupling portion for first supply (not shown), a lower coupling portion 342a for first discharge, a lower coupling portion for second supply (not shown), and a lower coupling portion 342b for second discharge. The lower coupling portion for first supply, the lower coupling portion 342a for first discharge, the lower coupling portion for second supply, and the lower coupling portion 342b for second discharge are pipes having a flow path that circulates the ink, and are formed to protrude to the lower surface of the flow path member Su of the lowermost layer of the laminate 333. The flow path of each of the lower coupling portion for first supply (not shown), the lower coupling portion 342a for first discharge, the lower coupling portion for second supply (not shown), and the lower coupling portion 342b for second discharge communicates with each of the laminate first supply flow path S1a, the laminate first discharge flow path S2a, the laminate second supply flow path S1b, and the laminate second discharge flow path S2b.

As shown in an enlarged manner in FIG. 4, the flow path member Su of the lowermost layer of the laminate 333 and the upper surface of the holder member 32 are bonded to each other by the cured substance GL of a glue. In addition, the lower coupling portion 342b for second discharge and the case second discharge pipe 337b are bonded to each other by the cured substance GL of a glue. Each of the lower coupling portion for first supply (not shown), the lower coupling portion 342a for first discharge, and the lower coupling portion for second supply (not shown) which are the coupling portions other than the lower coupling portion 342b for second discharge is also bonded to each of the case first supply pipe 336a, the case first discharge pipe 337a, and the case second discharge pipe 337b by the cured substance GL of a glue in the same manner as described above.

A3. Configuration of ejecting unit:

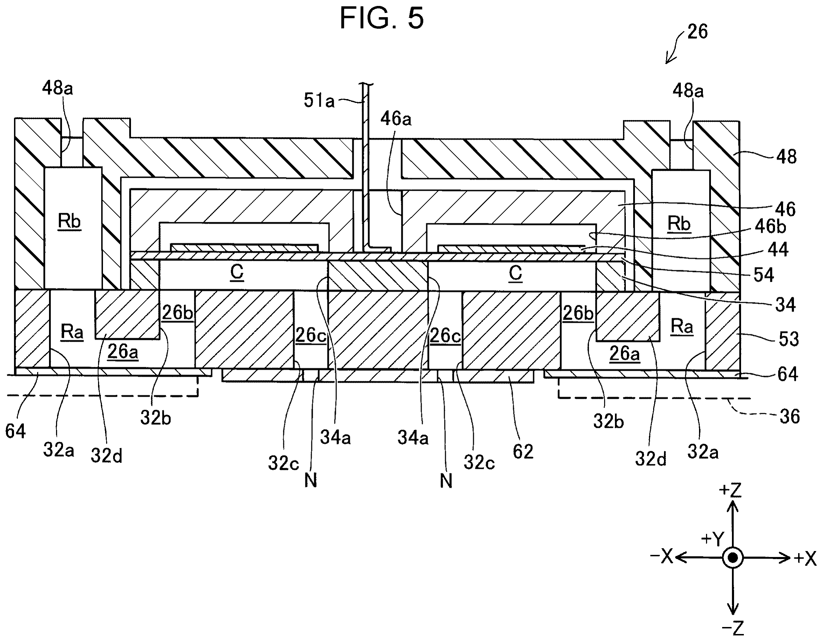

FIG. 5 is a cross-sectional view showing the ejecting unit 26. As shown in FIG. 5, the ejecting unit 26 includes a nozzle plate 62, two flow path sealing members 64, a flow path substrate 53, a pressure chamber substrate 34, a vibration

plate 54, a sealing body 46, a housing portion 48, and a flexible substrate 51a. The nozzle plate 62, the flow path sealing member 64, the flow path substrate 53, the pressure chamber substrate 34, the vibration plate 54, and the sealing body 46 are plate-shaped members elongated in the Y direction. Each of the nozzle plate 62, the flow path substrate 53, the pressure chamber substrate 34, the vibration plate 54, and the sealing body 46 has a substantially line-symmetrical structure with respect to the center line in the X direction. The size of the planar shape of the pressure chamber substrate 34, the vibration plate 54, and the sealing body 46 is less than the size of the planar shape of the flow path substrate 53 and the housing portion 48. In a case of assembly, the nozzle plate 62, the two flow path sealing members 64, the flow path substrate 53, the pressure chamber substrate 34, the vibration plate 54, the sealing body 46, and the housing portion 48 are laminated in this order, and are bonded to each other by the cured substance GL of a glue (not shown).

The nozzle plate 62 is a plate-shaped member in which the plurality of nozzles N are formed. The nozzles N are through-holes having a substantially circular plane shape. The plurality of nozzles N are arranged in the Y direction. Two rows in which the plurality of nozzles N are arranged are provided, and the two rows are formed side by side in the X direction. The two flow path sealing members 64 are disposed to sandwich the nozzle plate 62 in the X direction.

The flow path substrate 53 has two first opening portions 32a, a plurality of second opening portions 32b, and a plurality of third opening portions 32c. The planar shape of the first opening portion 32a is a rectangular shape elongated in the Y direction. The first opening portion 32a is formed along the side of the flow path substrate 53 parallel to the Y direction. The plurality of second opening portions 32b are arranged in the Y direction. Similarly, the plurality of third opening portions 32c are arranged in the Y direction. The number of rows of the second opening portion 32b and the number of rows of the third opening portion 32c are each two. The first opening portion 32a, the rows of one second opening portion 32b, the rows of one third opening portion 32c, the rows of one third opening portion 32c, the rows of one second opening portion 32b, and the first opening portion 32a are formed side by side in this order in the X direction. Further, the second opening portion 32b and the third opening portion 32c adjacent to each other in the X direction are formed to have substantially the same position in the Y direction.

The pressure chamber substrate 34 is formed with a plurality of opening portions 34a. The planar shape of the opening portion 34a is a rectangular shape elongated in the X direction. The plurality of opening portions 34a are arranged in the Y direction. Two rows in which the plurality of opening portions 34a are arranged are provided, and the two rows are formed side by side in the X direction. Further, the opening portion 34a is formed at a position overlapping the second opening portion 32b and the third opening portion 32c adjacent to each other and formed in the flow path substrate 53 as viewed in the Z direction.

The opening portion 34a formed in the pressure chamber substrate 34 and a piezoelectric element 44 formed at a position overlapping the opening portion 34a are formed at the vibration plate 54 as viewed in the Z direction. The sealing body 46 reinforces the strength of the pressure chamber substrate 34 and the vibration plate 54, and protects the piezoelectric element 44. The sealing body 46 has a sealing body opening portion 46a. The planar shape of the sealing body opening portion 46a is a rectangular shape elongated in the Y direction.

The first circuit substrate 383u or the second circuit substrate 383v is electrically coupled to the piezoelectric element 44 via the flexible substrate 51a.

The housing portion 48 is a case for storing the ink and has a frame shape. The material of the housing portion 48 is a resin. In a case of lamination, the pressure chamber substrate 34, the vibration plate 54, and the sealing body 46 are disposed in an internal space of the housing portion 48. A through-hole 48a is formed in each of both end portions of the housing portion 48 in the X direction.

A space Rb extending in the Y direction is formed at each of both end portions of the housing portion 48 in the X direction. The space Rb communicates with the through-hole 48a. A space Ra, a liquid supply chamber 26a, and a supply flow path 26b are formed by coupling the flow path substrate 53 and the flow path sealing member 64 to each other. The space Ra is an internal space of the first opening portion 32a. The liquid supply chamber 26a is a space surrounded by the first opening portion 32a, the second opening portion 32b, a partition wall 32d that separates the first opening portion 32a and the second opening portion 32b from each other, and the flow path sealing member 64. The supply flow path 26b is an internal space of the second opening portion 32b. The space Ra communicates with the space Rb and the liquid supply chamber 26a, and the liquid supply chamber 26a communicates with the supply flow path 26b. A pressure chamber C is formed by coupling the pressure chamber substrate 34 and the vibration plate 54 to each other. The pressure chamber C is a space surrounded by the opening portion 34a and the vibration plate 54. The pressure chamber C communicates with the supply flow path 26b. A communication flow path 26c is formed by coupling the flow path substrate 53 and the nozzle plate 62 to each other. The communication flow path 26c is an internal space of the third opening portion 32c. The communication flow path 26c communicates with the pressure chamber C and the nozzle N.

The space Ra and the space Rb function as a liquid storage chamber that stores the ink supplied to the pressure chamber C. The space Rb communicates with a plurality of spaces Ra disposed side by side in the Y direction, and the ink supplied through the through-hole 48a is stored in the plurality of spaces Ra via the space Rb. The ink stored in the spaces Ra circulates through the liquid supply chamber 26a and the supply flow path 26b and is supplied to the pressure chamber C.

Each of four through-holes 48a formed in the ejecting unit 26 defines any one of the flow path of the case first supply pipe 336a, the flow path of the case first discharge pipe 337a, the flow path of the case second supply pipe 336b, and the flow path of the case second discharge pipe 337b. In this manner, the first ink is stored in one of the two spaces Rb formed in the ejecting unit 26. The second ink is stored in the other space Rb of the two spaces Rb formed in the ejecting unit 26.

In a plan view as viewed in the Z direction, the piezoelectric element 44 is disposed at a position overlapping each of the two pressure chambers C. A driving signal and a reference voltage are input to the piezoelectric element 44 via the flexible substrate 51a. The piezoelectric element 44 is deformed by the input of the driving signal and the reference voltage and the application of the voltage, the vibration plate 54 vibrates in conjunction with the deformation of the piezoelectric element 44, the pressure in the pressure chamber C fluctuates, and thus the ink is ejected from the nozzle N.

A4. Details of glue:

As described above, in the production of the liquid ejecting head 30, a glue is used at a plurality of sites. In the present embodiment, for example, a two-liquid mixed glue described below is used for bonding the fixing plate 36 made of stainless steel and the reinforcing plate 37 made of stainless steel. Further, in the present embodiment, a two-liquid mixed glue described below is used for bonding the first flow path member Su, which is one of the plurality of flow path members Su, to the second flow path member Su overlapping the first flow path member Su. The structure flow path Sn defined by the first flow path member Su and the structure flow path Sn defined by the second flow path member Su are liquid-tightly coupled to each other by the cured substance GL of the glue. The first flow path member Su is an example of "first member", and the second flow path member Su is an example of "second member".

In a step of bonding the first flow path member Su and the second flow path member Su to each other, the glue is cured at a high temperature after the glue is applied to at least one of the first flow path member Su and the second flow path member Su. When the glue moves during the curing at a high temperature, the glue is cured in a state where the film thickness of the glue is non-uniform. Further, when the film thickness of the cured substance GL is non-uniform, there is a concern that the liquid may leak due to deterioration of the portion where the film thickness is small. Therefore, the glue is required to be rapidly cured. Further, an acidic pretreatment ink is used as the ink in some cases. Therefore, the cured substance GL of the glue having acid resistance is required.

In addition, the glue is required to have a low environmental load. For example, it is known that bisphenol A used in the synthesis of a glycidyl ether type epoxy resin that is commonly used as a glue and nonylphenol that can be used as an accelerator for a glue have a large environmental load. The inventors have found a glue having a low environmental load, being rapidly cured, and having acid resistance.

Specifically, in the present embodiment, the two-liquid mixed glue used for bonding the flow path members Su to each other and bonding the fixing plate 36 and the reinforcing plate 37 to each other is a two-liquid mixed glue containing a liquid A and a liquid B. In the following description, the two-liquid mixed glue having the characteristics of the present application is simply referred to as a glue unless otherwise specified. Further, in the following description, the liquid A, the liquid B, the main agent, and the curing agent are the liquid A, the liquid B, the main agent, and the curing agent that constitute the two-liquid mixed glue having the characteristics of the present application unless otherwise specified.

The liquid A contains a main agent containing an epoxy resin that does not contain bisphenol. The epoxy resin that does not contain bisphenol is a resin in which bisphenol is not used in the synthesis of the epoxy resin. In the present embodiment, the epoxy resin that does not contain bisphenol is N,N,N',N'-tetraglycidyl-m-xylenediamine or 4,4'-methylenebis(N,N-diglycidylaniline), which is a tetrafunctional glycidyl amine type epoxy resin.

The liquid B contains at least one of 2,5-bis (aminomethyl)bicyclo[2.2.1] heptane and 2,6-bis(aminomethyl) bicyclo[2.2.1]heptane, and an alkylphenol. In the present embodiment, the alkylphenol is an alkylphenol (a) containing at least one ethyl group or an alkylphenol (b) in which the alkyl group has 1 to 3 carbon atoms and which contains at least one methyl group and one isopropyl group. Further, in the present embodiment, the alkylphenol (a) is an alkylphenol represented by Formula (1), and the alkylphenol (b) is an alkylphenol represented by Formula (2).

[Chem. 1]

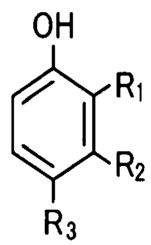

(1)

(Here, $R_1$, $R_2$, and $R_3$ in Formula (1) represent hydrogen or an ethyl group, and at least one of $R_1$, $R_2$, and $R_3$ represents an ethyl group.)

[Chem. 2]

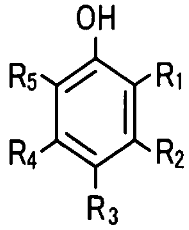

(2)

(Here, $R_1$, $R_2$, $R_3$, $R_4$, and $R_5$ in Formula (2) represent hydrogen or an alkyl group having 1 to 3 carbon atoms, at least one of $R_1$, $R_2$, $R_3$, $R_4$, and $R_5$ represents a methyl group, and at least one of $R_1$, $R_2$, $R_3$, $R_4$, and $R_5$ represents an isopropyl group). In addition, in the present embodiment, the alkylphenol represented by Formula (1) is 4-ethylphenol, and the alkylphenol represented by Formula (2) is carvacrol.

Further, the two-liquid mixed glue contains a polymer of an aromatic amine. In the present embodiment, the polymer of an aromatic amine is contained in the liquid B. Further, in the present embodiment, the polymer of an aromatic amine contains a 2-ethylaniline-formaldehyde polymerizable compound. The glue having the characteristics described above has a low environmental load, excellent acid resistance, and excellent rapid curability. Further, the 2,5-bis(aminomethyl)bicyclo[2.2.1]heptane and the 2,6-bis(aminomethyl)bicyclo[2.2.1]heptane are isomers, and will also be referred to as bis(aminomethyl)norbornane in the following description.

The liquid A contains a so-called bisphenol-free epoxy resin which does not contain bisphenol as a main agent. Accordingly, the environmental load can be reduced as compared with a glycidyl ether type epoxy resin which is an epoxy resin containing bisphenol. Therefore, the glue is particularly useful when printing is performed on the medium 12 used as a packaging material for food using the liquid ejecting apparatus 100.

It is known that the glycidyl amine type epoxy resin has lower reactivity with an amine as compared with a glycidyl ether type epoxy resin which is widely used. Here, the inventors have found that the reactivity between the liquid B and the glycidyl amine type epoxy resin can be improved by allowing the liquid B to contain bis(aminomethyl)norbornane and the phenol of the alkylphenol (a) or the phenol of the alkylphenol (b). In this manner, the curing reaction can be carried out at a relatively low temperature. Further, the curing temperature in the present embodiment is about 80°C. In a case where the temperature needs to be increased for the curing reaction, there is a concern that a stress is generated in different materials after bonding particularly when the different materials having a large difference in the coefficient of thermal expansion are bonded to each other. Here, since the curing reaction is carried out at a relatively low curing temperature, the stress generated in the different materials after bonding can be reduced even when the different materials are bonded to each other. Further, the bis(aminomethyl)norbornane is considered to contribute to improvement of the reactivity.

The viscosity of the amine contained in the curing agent is usually less than the viscosity of the epoxy resin contained in the main agent. When the difference between the viscosity of the main agent and the viscosity of the curing agent is large, the main agent and the curing agent are unlikely to be mixed. In addition, when the difference in viscosity is large, the difference in viscosity may cause a phenomenon in which a mixture of the main agent and the curing agent immediately reacts and is gelled and a phenomenon in which so-called skinning that the surface is cured first occurs. In particular, when a curing agent having high reactivity with the main agent is used, the above-described phenomenons are likely to occur. Here, the inventors have found that when the phenol of the alkylphenol (a) or the phenol of the alkylphenol (b) is added to bis(aminomethyl)norbornane, a chemical reaction occurs. Further, the inventors have found that when the curing agent contains a mixture of bis(aminomethyl)norbornane with the phenol of the alkylphenol (a) or the phenol of the alkylphenol (b) described above, the phenomenons such as gelling and the like can be prevented from occurring even when the curing agent is mixed with the main agent. It is considered that this is because a product in which the amount of a highly active primary amine is decreased is generated by the chemical reaction. Further, a plurality of phenols with high safety are present in the phenol of the alkylphenol (a) or the phenol of the alkylphenol (b), for example, as represented by carvacrol. That is, the present glue can be prepared by using a component containing no reproductive toxic substance, such as nonylphenol, and is thus safer.

In addition, the glue contains a polymer of an aromatic amine. In this manner, the acid resistance can be improved. Further, in the present embodiment, since the polymer of an aromatic amine is contained in the liquid B, the solidification of the liquid A is suppressed even when the liquid A is stored at room temperature, and thus the liquid A can be stored at room temperature for a relatively long period of time. For example, as described below, when the liquid A contains 3,4-dihydrocoumarin, the epoxy resin, the polymer of an aromatic amine, and the 3,4-dihydrocoumarin react with each other, and thus the liquid A is required to be stored in a refrigerator. Here, the inventors have found that when the liquid B in

place of the liquid A contains the polymer of an aromatic amine, the chemical reaction between the epoxy resin and 3,4-dihydrocoumarin is unlikely to occur. Therefore, when the liquid B contains the polymer of an aromatic amine, the acid resistance of the glue can be improved, and a glue that can store the liquid A at room temperature can be provided.

In addition, in the present embodiment, the liquid A contains 3,4-dihydrocoumarin. In this manner, the acid resistance can be improved, and the rapid curability can be improved.

Further, in the present embodiment, the liquid B contains an epoxy resin containing no bisphenol, or tyrosol. In the present embodiment, the epoxy resin that does not contain bisphenol is N,N,N',N'-tetraglycidyl-m-xylenediamine or 4,4'-methylenebis(N,N-diglycidylaniline), which is a tetrafunctional glycidyl amine type epoxy resin. In this manner, the viscosity of the liquid B can be increased, and thus the liquid A and the liquid B can be easily kneaded.

Further, in the present embodiment, the ratio of the phenol equivalent of carvacrol to the amine equivalent of 2,5-bis(aminomethyl)bicyclo[2.2.1]heptane and 2,6-bis(aminomethyl)bicyclo[2.2.1]heptane contained in the liquid B is 0.35 or greater and 0.70 or less. In this manner, as described below in test examples, a glue that is easy to handle can be provided. Here, the amine equivalent is determined by Equation (e1). The phenol equivalent is determined by Equation (e2).

$$\text{Amine equivalent} = \text{molecular weight of amine/number of active hydrogens of amine} \cdots \quad (e1)$$

$$\text{Phenol equivalent} = \text{molecular weight of phenol/number of hydroxyl groups} \cdots \quad (e2)$$

In addition, the epoxy equivalent described below is determined by Equation (e3).

$$\text{Epoxy equivalent} = \text{molecular weight of epoxy resin/number of epoxy groups} \cdots \quad (e3)$$

Here, the expression "ratio of the phenol equivalent to the amine equivalent" when the liquid B contains a plurality of amines denotes that the liquid B is prepared such that the total equivalent obtained by adding the equivalent of each amine coincides with the mass of the amine calculated using the ratio (phenol equivalent/amine equivalent). The details will be described in the test examples below.

Further, in the present embodiment, the ratio of the epoxy equivalent of the tetrafunctional glycidyl amine type epoxy resin contained in the liquid B to the amine equivalent of 2,5-bis(aminomethyl)bicyclo[2.2.1]heptane and 2,6-bis(aminomethyl)bicyclo[2.2.1]heptane contained in the liquid B is 0.14 or less. In this manner, even when the components of the liquid B are mixed and an adduct treatment is performed, the solidification of the liquid B can be suppressed as described below in the test examples.

Further, in the present embodiment, the ratio of the epoxy equivalent of the tetrafunctional glycidyl amine type epoxy resin contained in the liquid B to the amine equivalent of 2,5-bis(aminomethyl)bicyclo[2.2.1]heptane and 2,6-bis(aminomethyl)bicyclo[2.2.1]heptane contained in the liquid B is 0.07 or greater. In this manner, a glue that is easy to knead the liquid A with the liquid B can be provided as described below in the test examples.

Further, in the present embodiment, the ratio of the amine equivalent of 2,5-bis(aminomethyl)bicyclo[2.2.1]heptane and 2,6-bis(aminomethyl)bicyclo[2.2.1]heptane contained in the liquid B to the amine equivalent of all amines contained in the two-liquid mixed glue is 0.13 or greater and 0.22 or less. In this manner, a glue having excellent acid resistance can be provided as described below in the test examples.

As described above, the two-liquid mixed glue having the characteristics described in the present embodiment has a low environmental load, is rapidly cured, and has excellent acid resistance. Since the two-liquid mixed glue is rapidly cured, the reliability of the liquid ejecting head 30 can be improved by making the film thickness of the cured substance GL of the two-liquid mixed glue, which bonds the first flow path member Su and the second flow path member Su to each other, uniform. Further, since the two-liquid mixed glue has acid resistance, even when an acidic ink is used as the liquid circulating through the flow path member Su, the deterioration of the cured substance GL of the two-liquid mixed glue can be suppressed, and the reliability of the liquid ejecting head 30 can be improved. In addition, since the environmental load is small, the printed material on which printing is performed using the liquid ejecting apparatus 100 can be used at ease. In addition, from the viewpoints of handleability and excellent storage stability, the work efficiency in a production step of kneading and applying the liquid A and the liquid B can be improved, and the labor required for storage can be reduced.

Further, the two-liquid mixed glue used for producing the liquid ejecting head 30 is not limited to the above-described embodiment. Specifically, the epoxy resin containing no bisphenol which is contained in the main agent is not limited to N,N,N',N'-tetraglycidyl-m-xylenediamine or 4,4'-methylenebis(N,N-diglycidylaniline). The phenol of the alkylphenol (a) or the phenol of the alkylphenol (b) is not limited to 4-ethylphenol or carvacrol. For example, as the phenol of the

alkylphenol (b), 2-hydroxy-para-cymene, thymol, 3-hydroxy-para-cymene, ortho-cymen-5-ol, or the like can be used. Even when these components are used, each of these components has the same chemical properties as the chemical properties of the corresponding components of the above-described embodiment, and thus a two-liquid mixed glue that exhibits the same effects as the effects of the above-described embodiment can be prepared.

In addition, the liquid B may contain neither an epoxy resin containing no bisphenol nor tyrosol. In addition, the ratio of the phenol equivalent of carvacrol to the amine equivalent of 2,5-bis(aminomethyl)bicyclo[2.2.1]heptane and 2,6-bis(aminomethyl)bicyclo[2.2.1]heptane contained in the liquid B may be less than 0.35 or greater than 0.70. In addition, the ratio of the epoxy equivalent of the tetrafunctional glycidyl amine type epoxy resin contained in the liquid B to the amine equivalent of 2,5-bis(aminomethyl)bicyclo[2.2.1]heptane and 2,6-bis(aminomethyl)bicyclo[2.2.1]heptane contained in the liquid B may be greater than 0.14. In addition, the ratio of the epoxy equivalent of the tetrafunctional glycidyl amine type epoxy resin contained in the liquid B to the amine equivalent of 2,5-bis(aminomethyl)bicyclo [2.2.1]heptane and 2,6-bis(aminomethyl)bicyclo[2.2.1]heptane contained in the liquid B may be less than 0.07. In addition, the ratio of the amine equivalent of 2,5-bis(aminomethyl)bicyclo[2.2.1]heptane and 2,6-bis(aminomethyl)bicyclo[2.2.1]heptane contained in the liquid B to the amine equivalent of all amines contained in the two-liquid mixed glue may be less than 0.13 or greater than 0.22. A two-liquid mixed glue having excellent rapid curability and acid resistance can be prepared regardless of the values of the above-described ratios.

## B. Test example:

### B1. List of components:

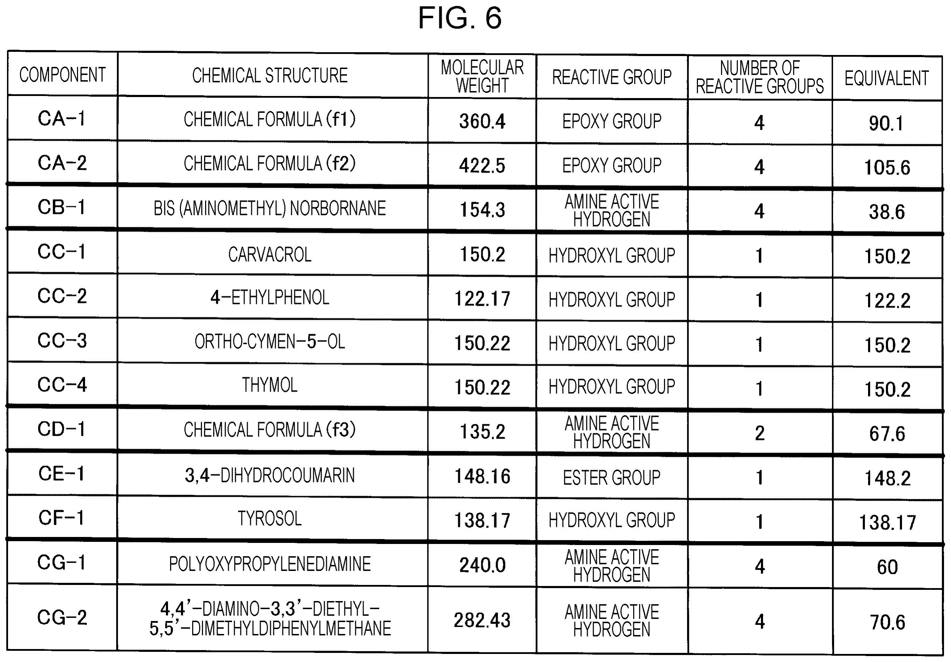

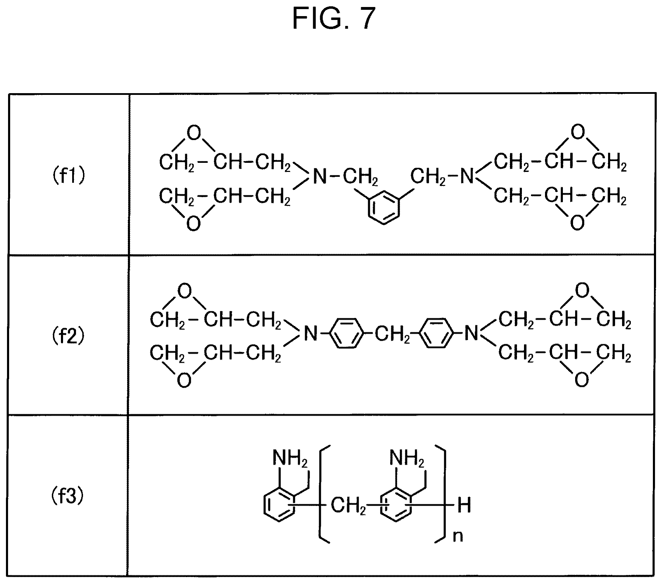

FIG. 6 shows a list of components used in the tests. FIG. 7 shows chemical structural formulae from Chemical Formula (f1) to Chemical Formula (f3). In the present specification, each component is specified by using a unique name provided for each component.

The CAS registry number of a component CA-1 is 63738-22-7. As shown in Chemical Formula (f1) of FIG. 7, the component CA-1 is N,N,N',N'-tetraglycidyl-m-xylenediamine, which is an epoxy resin containing a tetrafunctional group. In the test, TETRAD-X (registered trademark/product name, manufactured by Mitsubishi Gas Chemical Company, Inc.) was used as the component CA-1. The CAS registry number of a component CA-2 is 28768-32-3. As shown in Chemical Formula (f2) of FIG. 7, the component CA-2 is 4,4'-methylenebis(N,N-diglycidylaniline), which is an epoxy resin containing a tetrafunctional group. In the test, ELM434VL (product name, manufactured by Sumitomo Chemical Co., Ltd.) was used as the component CA-2.

A component CB-1 is bis(aminomethyl)norbornane of alicyclic amine, and the CAS registry number is 56602-77-8. The component CB-1 is an isomer mixture containing 2,5-bis(aminomethyl)bicyclo[2.2.1]heptane and 2,6-bis(aminomethyl)bicyclo[2.2.1]heptane. In the test, a product manufactured by Tokyo Chemical Industry Co., Ltd. was used as the component CB-1.

A component CC-1 is carvacrol which is a phenol, and the CAS registry number is 499-75-2. In the test, a product manufactured by Tokyo Chemical Industry Co., Ltd. was used as the component CC-1. A component CC-2 is 4-ethylphenol which is a phenol, and the CAS registry number is 123-07-9. In the test, a product manufactured by Tokyo Chemical Industry Co., Ltd. was used as the component CC-2. A component CC-3 is ortho-cymen-5-ol which is a phenol, and the CAS registry number is 3228-02-2. In the test, a product manufactured by Tokyo Chemical Industry Co., Ltd. was used as the component CC-3. A component CC-4 is thymol which is a phenol, and the CAS registry number is 89-83-8. In the test, a product manufactured by Tokyo Chemical Industry Co., Ltd. was used as the component CC-4.

The CAS registry number of a component CD-1 is 69178-41-2. As shown in Chemical Formula (f3) of FIG. 7, the component CD-1 is a polymer of an aromatic amine. n in Chemical Formula (f3) represents an integer of 2 or greater. In the test, KAYAHARD (registered trademark) AA (product name, manufactured by Nippon Kayaku Co., Ltd.) was used as component CD-1.

A component CE-1 is 3,4-dihydrocoumarin of a lactone, and the CAS registry number is 119-84-6. In the test, a product manufactured by Tokyo Chemical Industry Co., Ltd. was used as the component CE-1. A component CF-1 is a tyrosol of phenols, and the CAS registry number is 501-94-0. In the test, a product manufactured by Tokyo Chemical Industry Co., Ltd. was used as the component CF-1.

A component CG-1 is polyoxypropylenediamine of an aliphatic amine, and the CAS registry number is 9046-10-0. In the test, a product manufactured by Mitsui Chemicals, Inc. was used as the component CG-1. A component CG-2 is 4,4'-diamino-3,3'-diethyl-5,5'-dimethyl diphenylmethane of an aromatic amine, and the CAS registry number is 19900-72-2. In the test, a product manufactured by Tokyo Chemical Industry Co., Ltd. was used as the component CG-2.

The molecular weight, the reactive group, the number of reactive groups, and the equivalent of each component are as shown in FIG. 6. In each of the tests described below, the mass was calculated using the equivalent mass shown in FIG. 6 to obtain the target equivalent ratio.

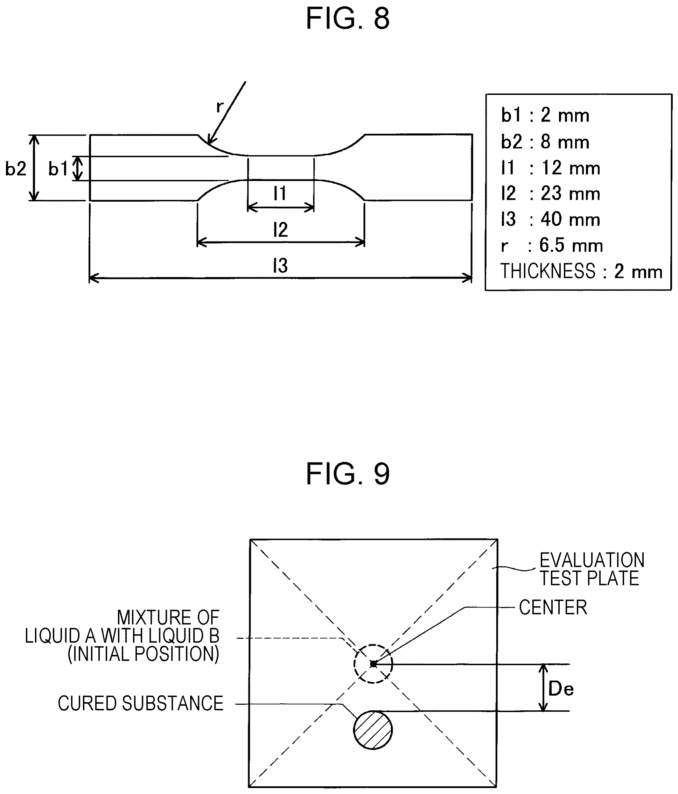

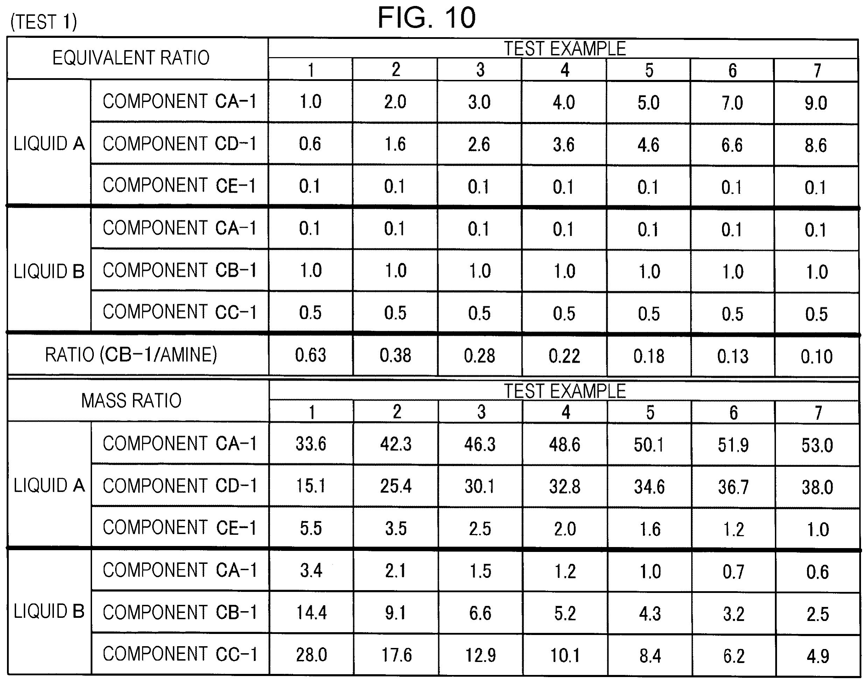

Tests 1 to 13, which were tests for preparing a cured substance by changing the components constituting each of

the liquid A and the liquid B and the equivalent ratio of the components contained in each of the liquids and evaluating the cured substance, were performed. The evaluation in the tests includes two types of evaluation, an evaluation A for evaluating the acid resistance and an evaluation B for evaluating the rapid curability. FIG. 8 is a view for explaining the evaluation A. FIG. 9 is a view for explaining the evaluation B. FIGS. 10 to 26 are views collectively showing the evaluation results of the components, the equivalent ratios of the components, and the mass ratios in each of the tests. Further, the mass ratio is equal to the mass of each component satisfying the equivalent ratio when the total mass obtained by adding the mass of all components is set to 100 g. Further, the mass ratios shown in the tables from FIG. 10 to FIG. 26 are substantially the same as the equivalent ratios. In the present specification, the mass ratios are also described for reference.

B2. Description of evaluation A:

B2-1. Preparation of evaluation object:

First, a cured substance having a dumbbell shape shown in FIG. 8 was prepared. The dumbbell shape is based on the plastic test piece type CP of Japanese Industrial Standard JIS K 7139. As the details of the preparation method, first, cutting processing was performed to prepare a mold having a dumbbell shape into a polytetrafluoroethylene (PTFE) sheet having a thickness of 3 mm.

Next, a mixture of the liquid A and the liquid B was prepared. Here, a preparation method for a cured substance will be described with reference to Test Example 1. In the present test, the liquid A and the liquid B were prepared, and each of the liquid A and the liquid B was stored in a refrigerator or a freezer. Further, in the preparation of each test example, a method of returning the liquid A and the liquid B to room temperature and kneading the liquids was employed. Further, when the components of the liquid A are mixed, a change rate, which is a change amount of the viscosity of the liquid A with respect to the time due to the chemical reaction between the components, may increase. The same applies to the liquid B. Therefore, a treatment of carrying out the chemical reaction until the change rate of the viscosity becomes slow is usually performed. As described above, a treatment of allowing the mixture of the components to stand at the reaction temperature until the chemical reaction is substantially completed is also referred to as an adduct treatment or an aging treatment. By performing the adduct treatment, even when each of the liquid A and the liquid B is returned to room temperature, a sudden change in viscosity of each liquid is unlikely to occur, and thus there are advantages of satisfactorily performing the mixing operation of the liquid A and the liquid B and the subsequent coating operation. Even in the present test, a method of storing each of the liquid A and the liquid B in a refrigerator or a freezer after the adduct treatment was performed was employed.

In a case of preparation of the liquid A, first, the component CA-1 which is an epoxy resin and the component CD-1 which is an amine were mixed at the equivalent ratio and the mass ratio shown in FIG. 10, the component CE-1 was mixed with the mixture, and the mixture was allowed to stand at 85°C for 2 hours for a reaction as the adduct treatment. Thereafter, the prepared liquid A was stored in a refrigerator or a freezer.

In a case of preparation of the liquid B, the component CA-1, which is an epoxy resin, and the component CB-1, which is an amine, were mixed at the equivalent ratio and the mass ratio shown in FIG. 8, and the component CC-1 was mixed with the mixture 30 minutes after the mixing, and the mixture was allowed to stand at 95°C for 30 minutes for reaction as an adduct treatment. Thereafter, the prepared liquid A was stored in a refrigerator or a freezer.

As described above, each of the liquid A and the liquid B was returned to room temperature, and the liquids were kneaded. Further, in the present test, a method of performing the adduct treatment to prepare the liquid A and the liquid B and storing the liquids in a refrigerator or a freezer was employed, but the method is not necessarily be employed. As described above, the adduct treatment is performed to improve the workability of an operation of kneading the liquid A and the liquid B, and even when the adduct treatment is omitted, the properties such as acid resistance and rapid curability of the glue are not affected. In addition, a method of storing the liquid A and the liquid B in a refrigerator or a freezer is not essential. The purpose of storing the liquid A and the liquid B in a refrigerator or a freezer is to inhibit the progress of the chemical reaction of each of the liquid A and the liquid B. Therefore, when the liquid A and the liquid B prepared respectively are mixed early or when the liquid A or the liquid B has a property of low reactivity even at room temperature, it is not necessary to store the liquid A and the liquid B in a refrigerator or a freezer.

Further, even in Tests 2 to 12, the preparation method for a mixture of the liquid A and the liquid B is the same as the preparation method in Test 1 unless otherwise specified. In addition, the method of preparing a mixture of the liquid A and the liquid B in the evaluation B described below is the same as the preparation method in the evaluation A of Test 1. Therefore, the description of the method of preparing the mixture of the liquid A and the liquid B for Tests 2 to 12 in the evaluation A and for Tests 1 to 12 in the evaluation B, excluding the different parts, will be omitted.

A mixture of the liquid A and the liquid B was poured into the dumbbell-shaped mold prepared, and the mixture overflowing was removed with a PTFE squeegee. A PTFE sheet in which the mixture of the liquid A and the liquid B was accommodated in the mold was put into a constant temperature bath at room temperature, and the constant temperature bath was heated to 80°C after 30 minutes. Thereafter, the mixture of the liquid A and the liquid B was cured by being heated

in a constant temperature bath at 80°C for 10 hours. After the heating was stopped, the cured substance was allowed to stand for 5 hours while being placed in the constant temperature bath, and the cured substance was returned to room temperature after the temperature of the constant temperature bath was lowered to about 40°C. Further, the PTFE sheet was deformed to take out the cured substance.

Next, the prepared cured substance was immersed in an evaluation liquid for 1 hour. Specifically, the cured substance was put into a 30 ml LABORAN (registered trademark) screw tube bottle, the evaluation liquid was poured so that the entire cured substance was immersed, the bottle was sealed, and the bottle was allowed to stand in a constant temperature bath at 60°C for one week. The evaluation liquid is a liquid that imitates the acidic pretreatment ink used in the above-described liquid ejecting apparatus 100. The components of the evaluation liquid and the mass ratios of the respective components are as follows. The lactic acid contained in the evaluation liquid is an organic acid, and the pH of the evaluation liquid is about 2.

(Evaluation liquid)

Component: mass ratio
3-methyl-1,5-pentanediol (MPD): 10
OLFINE (registered trademark) E1010: 1
Water: 84
Lactic acid: 5

Next, the cured substance was separated from the evaluation liquid using an aspirator type filtration device. As a filter for filtration, a PTFE membrane filter having a pore size of 10 μm was used. The remaining cured substance on the funnel side was washed with pure water and ethanol in a state of containing minute objects of the cured substance, and dried at 25°C for 1 day. The dried cured substance was evaluated by the evaluation A-1, the evaluation A-2, and the evaluation A-3 described below. In the following description, the dried cured substance is also referred to as an evaluation object.

B2-2. Evaluation A-1 (weight change rate):

When the weight of the cured substance before the immersion in the evaluation liquid was defined as W1 and the weight of the evaluation object was defined as W2, the swelling ratio was calculated using Equation (e4).

$$\text{Swelling ratio [\%]} = (W2 - W1)/W1 \times 100 \cdots \text{(e4)}$$

In a case where a cured substance has poor acid resistance, that is, the chemical structure of the cured substance is easily changed by an acid, the cured substance is swollen and the mass thereof increases when the cured substance is immersed in the evaluation liquid. Therefore, the acid resistance was evaluated in three ranks of A, B, and C based the determined swelling ratio as described below. The ranks indicate that the acid resistance is excellent in order of C, B, and A. Further, the cured substance with poor acid resistance typically has a shape that is broken and is divided into a plurality of small pieces when immersed in the evaluation liquid. Therefore, the evaluation A-2 described below was performed on the cured substance maintained in a dumbbell shape.

A: The swelling ratio is less than 10%.
B: The swelling ratio is 10% or greater and less than 20%.
C: The swelling ratio is 20% or greater.

B2-3. Evaluation A-2 (tensile breaking strength):

The tensile strength of the evaluation object was measured using a tensile testing device. The tensile testing device used was STB-1225S (manufactured by A and D Company, Limited). Specifically, a parallel tightening type jaw was attached to each of both wide end portions of the dumbbell-shaped cured substance, the evaluation object was pulled at a rate of 0.5 mm/min until the cured substance was broken, and the tensile load at the time of breaking was measured. In addition, the area of the broken surface was measured and acquired with a digital microscope VHX-6000 (manufactured by Keyence Corporation). The breaking strength was calculated by Equation (e5) using the obtained tensile load and the area of the broken surface.

$$\text{Breaking strength [MPa]} = \text{tensile load [N]} / \text{area of broken portion } [mm^2] \cdots \text{(e5)}$$

The breaking strength increases as the acid resistance of the cured substance is more excellent. Therefore, as described below, the breaking strength was evaluated in three ranks of A, B, and C. The ranks indicate that the acid resistance is excellent in order of C, B, and A.

A: The breaking strength is 40 MPa or greater.
B: The breaking strength is 20 MPa or greater and less than 40 MPa.
C: The breaking strength is less than 20 MPa.

B2-4. Evaluation A-3 (appearance observation):

The acid resistance of the evaluation object was evaluated by appearance observation. In the cured substance with poor acid resistance, the chemical structure is changed due to the acid, and cracks occur in the evaluation object. In addition, when the chemical structure is changed, the color changes to brown. Cracks and discoloration are likely to occur at an edge portion of the evaluation object having a dumbbell shape. Therefore, the appearance was evaluated in four ranks of A, B, C, and D as follows. The ranks indicate that the acid resistance is excellent in order of D, C, B, and A.

A: Discoloration or cracks are not found at the edge portion.
B: Discoloration is found at the edge portion, but cracks are not found.
C: Discoloration and cracks are found at the edge portion.
D: Cracks are found at sites other than the edge portion, and the shape is not maintained.

B3. Description of evaluation B (rapid curability):

A mixture of the liquid A and the liquid B was applied to an evaluation test plate using a dispenser device. The dispenser device used is ML-808FX (manufactured by Musashi Engineering Co., Ltd.). Specifically, a syringe for a dispenser with a plastic needle having an inner diameter of 0.66 mm was filled with the mixture, and 5 mg of the mixture was applied to the center of the evaluation test plate.

The evaluation test plate used was a plate obtained by applying N-(3-trimethoxysilylpropyl)ethylenediamine having a CAS number of 1760-24-3 to a plate member of SUS430 having a length of 20 mm, a width of 20 mm, and a thickness of 0.2 mm by a known method. Further, the evaluation test plate is a plate that imitates, for example, the fixing plate 36 in the liquid ejecting apparatus 100. N-(3-trimethoxysilylpropyl)ethylenediamine is a silane coupling agent that is widely used. It is known that a silane coupling agent can improve the adhesiveness between a metal and an organic substance. That is, the evaluation B is an evaluation for a case where a production method in which a glue is applied to a metal member coated with a silane coupling agent in advance is employed when the metal member is bonded.

When a silane coupling agent is used, there is an advantage that the adhesiveness between the metal, which is an inorganic substance, and the glue, which is an organic substance, is improved. Meanwhile, when the metal is coated with a silane coupling agent, the glue applied tends to easily move from a position where the glue is applied. Therefore, the evaluation using a silane coupling agent can also be regarded as an evaluation of the position movement under more severe conditions.

A flat surface (a surface shown in FIG. 9) of the evaluation test plate having a size of 20 mm x 20 mm was placed on a desk such that the flat surface was parallel to a surface perpendicular to the gravity direction, and the mixture of the liquid A and the liquid B returned to room temperature was applied to the central portion of the flat surface of the evaluation test plate and allowed to stand at room temperature for 5 hours. The evaluation test plate was put into a constant temperature bath at room temperature in a state of being vertically stood, and was heated such that the temperature reached 80°C after 30 minutes. Thereafter, the mixture of the liquid A and the liquid B was cured at 80°C for 10 hours by being heated. Next, after the heating was stopped, the cured substance was allowed to stand in the constant temperature bath for 5 hours, and the evaluation test plate to which the cured substance was adhered was returned to room temperature after the temperature of the constant temperature bath was lowered to about 40°C.

Further, the jig used to vertically stand the evaluation test plate includes a base, a vertical plate fixed to the base in a state of being vertically stood with respect to the base, and a permanent magnet. The permanent magnet is attached to the rear surface of the vertical plate. When the evaluation test plate is disposed on the surface of the vertical plate, the evaluation test plate is a magnetic body and is thus attracted to the permanent magnet by a magnetic force, and the evaluation test plate is held in a state of being in contact with the surface of the vertical plate.

In the production of the liquid ejecting head 30, for example, when the fixing plate 36 and the reinforcing plate 37 are bonded to each other, the mixture of the liquid A and the liquid B is applied to at least one of the bonding surface of the

fixing plate 36 and the bonding surface of the reinforcing plate 37, and the mixture is allowed to stand at a set curing temperature for a set curing time until the mixture is cured. When the mixture of the liquid A and the liquid B moves from the initial position before being cured, the film thickness of the cured substance of the glue becomes non-uniform. When the glue, which is the mixture of the liquid A and the liquid B, is placed in a high-temperature environment for curing, the mixture has a low viscosity due to an increase in temperature, and the curing reaction proceeds. When the curing is fast, the movement due to a decrease in viscosity is unlikely to occur. Therefore, the rapid curability can be evaluated by the moving distance.

When the evaluation test plate is disposed in the vertical direction, the mixture of the liquid A and the liquid B moves downward due to the own weight. Therefore, as shown in FIG. 9, evaluation can be made such that the rapid curability is excellent as the distance between the initial position where the mixture of the liquid A and the liquid B is applied and the position of the cured substance decreases. Specifically, the rapid curability was evaluated in three ranks of A, B, and C using an evaluation distance De between the center of the evaluation test plate, which is the center of the initial position, and the upper end of the cured substance. The ranks indicate that the rapid curability is excellent in order of C, B, and A.

A: The upper end of the cured substance is above the center of the evaluation test plate.
B: The evaluation distance De is 0 mm or longer and 5 mm or shorter.
C: The evaluation distance De is longer than 5 mm.

B4. Test 1:

As described above, the inventors found that the reactivity between the liquid B and the glycidyl amine type epoxy resin can be improved by allowing the liquid B to contain bis(aminomethyl)norbornane and the phenol of the alkylphenol (a) or the phenol of the alkylphenol (b). It is considered that bis(aminomethyl)norbornane contributes to the improvement of the reactivity. In Test 1, the content ratio of bis(aminomethyl)norbornane to the amine in the entire glue was evaluated.

FIG. 10 is a table showing the equivalent ratios and the mass ratios of Test Example 1 to Test Example 7 of Test 1. FIG. 10 shows the values of the ratio (CB-1/amine). The ratio (CB-1/amine) is a ratio of the amine equivalent of bis(aminomethyl)norbornane contained in the liquid B to the amine equivalent of all amines contained in the glue. In Test 1, the amines contained in the glue are two types of amines, which are the component CD-1 and the component CB-1. When the amine equivalent of the component CD-1 is defined as Ae(CD-1) and the amine equivalent of the component CB-1 is defined as Ae(CB-1), the ratio (CB-1/amine) is obtained by Equation (e6).

$$\text{Ratio (CB-1/amine)} = Ae(CD\text{-}1)/(Ae(CD\text{-}1) + Ae(CB\text{-}1)) \cdots (e6)$$

In Test 1, the ratio (CB-1/amine) was changed in a range of 0.1 to 0.63.

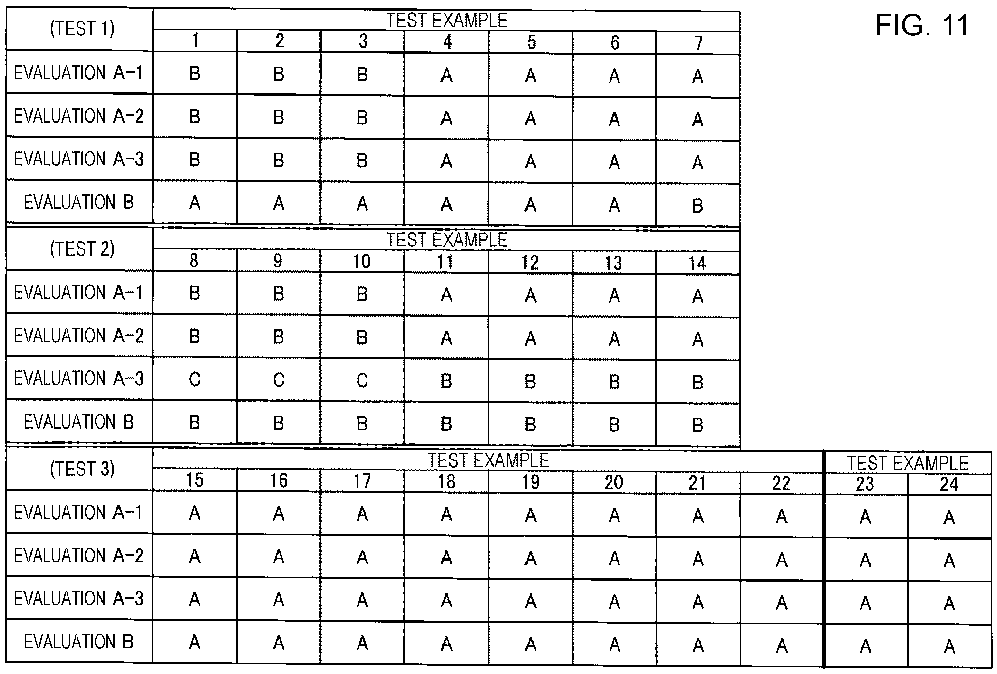

FIG. 11 is a table collectively showing the evaluation results of each of Tests 1 to 3. As shown in the evaluation result of Test 1 of FIG. 11, the evaluation result of Test Examples 1 to 3 is the rank B, whereas the evaluation result of Test Examples 4 to 7 is the rank A in Evaluation A. Therefore, it is found that the ratio (CB-1/amine) is preferably 0.22 or less. It is considered that this is because the acid resistance decreases as the amount of the bis(aminomethyl)norbornane (component CB-1) increases, and the acid resistance is improved as the amount of the aromatic amine polymer (component CD-1) increases.

In addition, the evaluation result of Test Example 7 is the rank B in Evaluation B. It is considered that this is because the amount of bis(aminomethyl)norbornane (component CB-1) is small with respect to the main agent contained in the liquid A, and thus the effect of bis(aminomethyl)norbornane that increases the reactivity in the curing reaction between the liquid A and the liquid B is weakened. As described above, it is found that the ratio (CB-1/amine) is preferably 0.22 or less. Further, the ratio (CB-1/amine) is preferably greater than 0.10 and more preferably 0.13 or greater.

B5. Test 2:

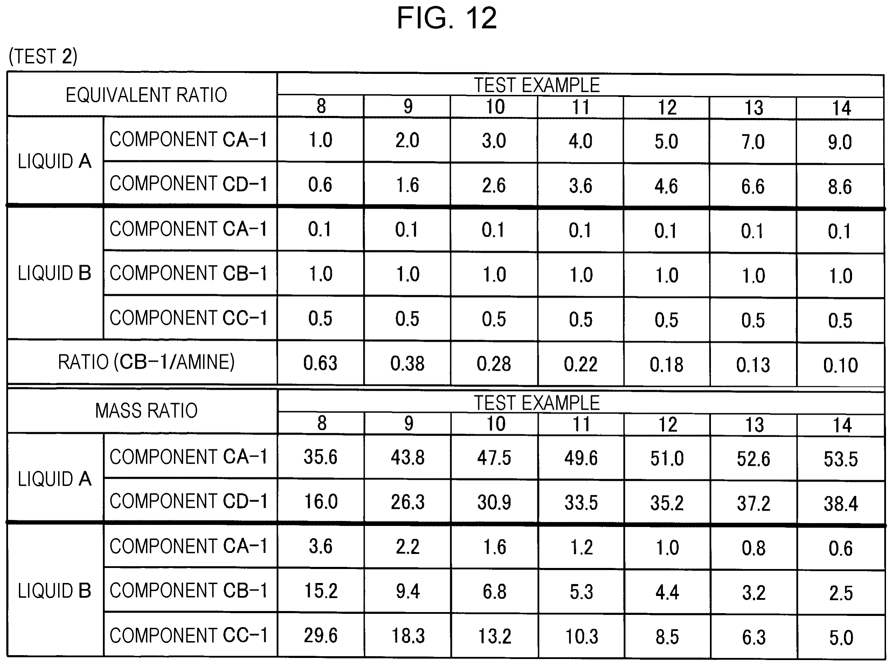

FIG. 12 is a table showing the equivalent ratios and the mass ratios of Test Example 8 to Test Example 14 of Test 2. Test 2 is different from Test 1 in terms that the liquid A does not contain the component CE-1. As shown in the evaluation results of Test 2 of FIG. 11, for example, the evaluation A-3, which is the evaluation for cracks, is the rank B when focusing on Test Examples 11 to 14 in which the ratio (CB-1/amine) is 0.22 or less. Meanwhile, in Test Examples 4 to 7 in which the ratio (CB-1/amine) is 0.22 or less in Test 1, the result of Evaluation A-3 is the rank A. That is, when Test Example 1 and Test Example 2 are compared with each other among the test examples in which the ratio (CB-1/amine) is 0.22 or less, the ranks of Evaluation A-3 of Test Examples 11 to 14 of Test 2 are lower than the rank A of Test 1. It is considered that this is because the effect of suppressing cracks of 3,4-dihydrocoumarin (component CE-1) was not obtained.

Further, when focusing on the evaluation B, the results of Test Examples 4 to 6 of Test 1 are evaluated as the rank A, but the results of Test Examples 11 to 13 of Test 2 are evaluated as the rank B, and the rank is lowered from the rank A of Test 1. It is considered that this is because, when the glue contains 3,4-dihydrocoumarin (component CE-1), the curability is improved by the reaction between 3,4-dihydrocoumarin (component CE-1) and bis(aminomethyl)norbornane (component CB-1). As described above, it is preferable that the glue contains 3,4-dihydrocoumarin (component CE-1).

Since the component CE-1 (3,4-dihydrocoumarin) has an odor, it is not preferable to increase the equivalent ratio. In addition, when the equivalent ratio of the component CE-1 is large, the viscosity of the glue is decreased. Further, since the component CE-1 promotes the curing reaction, when the glue contains a large amount of the component CE-1, the glue is cured at an early stage. Therefore, the equivalent of the component CE-1 is preferably about 0.1 equivalent or greater and 0.5 equivalent or less with respect to the amine equivalent.

B6. Test 3:

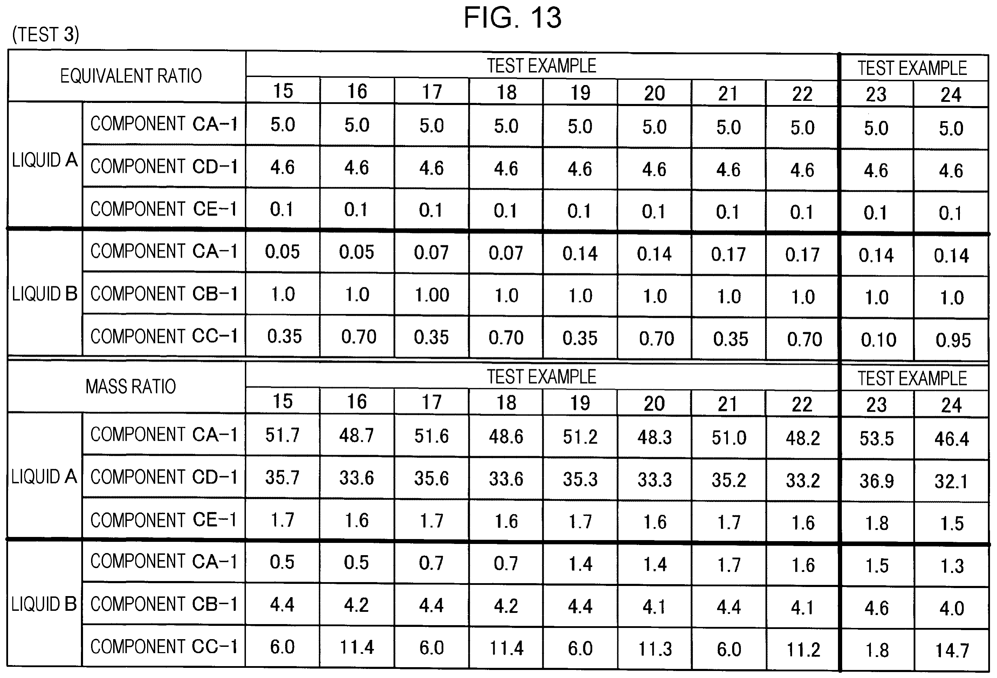

FIG. 13 is a table showing the equivalent ratios and the mass ratios of Test Example 15 to Test Example 24 of Test 3. The components of the liquid B were evaluated in Evaluation 3 based on the evaluation results of Test Examples 1 and 2 and the component configuration of the liquid A of Test Example 5 in which the evaluation results were satisfactory. Specifically, the ratio (CA-1/CB-1) which is the equivalent ratio of the component CA-1 to bis(aminomethyl)norbornane (component CB-1) in the liquid B was changed in a range of 0.05 to 0.17. The reason why the liquid B contains the component CA-1 is to increase the viscosity of the liquid B. In addition, the ratio (CC-1/CB-1) which is the equivalent ratio of the component CC-1 to the component CB-1 was changed in a range of 0.10 to 0.95.

Further, the viscosity of the liquid B when the liquid contains no component CA-1 is extremely low. In this case, when the liquid A and the liquid B are kneaded, it is necessary to stir the mixture at a gentle speed. For example, when a kneading machine is used, the liquid amount and the rotation speed are limited in order to prevent the liquid from scattering. Alternatively, the mixture is required to be kneaded manually in advance. In other words, the production step can be performed efficiently by preparing the liquid B having a high viscosity to such an extent that the liquid B is easily kneaded with the liquid A.

The ratio (CA-1/CB-1) is a ratio of the epoxy equivalent of the tetrafunctional glycidyl amine type epoxy resin contained in the liquid B to the amine equivalent of the bis(aminomethyl)norbornane contained in the liquid B. In Test 3, the tetrafunctional glycidyl amine type epoxy resin contained in the liquid B is only the component CA-1. Therefore, when the epoxy equivalent of the component CA-1 is defined as Ae(CA-1) and the amine equivalent of the component CB-1 is defined as Ae(CB-1), the ratio (CA-1/CB-1) is determined by Equation (e7).

$$\text{Ratio (CA-1/CB-1)} = \text{Ae(CA-1)}/\text{Ae(CB-1)} \cdots \text{(e7)}$$

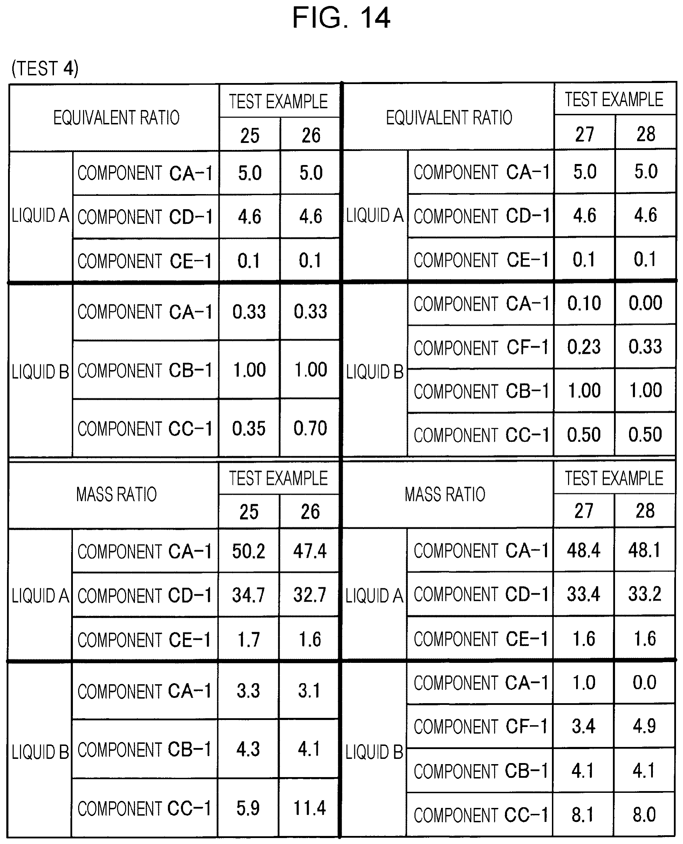

Further, in the table showing the equivalent ratios shown in FIG. 14, since the equivalent ratio of the component CB-1 is "1.0", the equivalent ratio of the component CA-1 shown in the table of FIG. 14 matches the ratio (CA-1/CB-1). Therefore, the description of the ratio (CA-1/CB-1) is omitted in FIG. 14.

As shown in the evaluation results of Test 3 of FIG. 11, the evaluation results were the rank A in both Evaluation A and Evaluation B for all of Test Examples 15 to 24. It is considered that this is because the equivalent ratio of the component CA-1 in the liquid B is 0.05 to 0.17, which is small, the evaluation is not significantly affected even when the equivalent ratio is changed in this small range.

Here, it is found that there is a preferable range for the ratio (CA-1/CB-1) from the viewpoint of the viscosity other than Evaluation A and Evaluation B. As the equivalent ratio of the component CA-1 contained in the liquid B increases, the viscosity of the liquid B increases. The viscosities in Test Examples 15 and 16 in which the ratio (CA-1/CB-1) is 0.05 are low and difficult to handle. In addition, in Test Examples 21 and 22 in which the ratio (CA-1/CB-1) is 0.17, the liquid B after the adduct treatment becomes a highly viscous liquid. When Test Example 21 is compared with Test Example 22, in Test Example 22, the amount of the component CB-1 is larger than the amount of the component CC-1, and the temperature is higher due to the exothermic reaction in a case where the component CC-1 and the component CB-1 are mixed as compared with Test Example 21. Therefore, the liquid B is required to be handled with care and thus is difficult to handle. In addition, the viscosity in Test Example 21 is higher than the viscosity in Test Example 22. Although the use of the liquid B as a glue is not impossible, the liquid B is difficult to handle, and thus the ratio (CA-1/CB-1) is preferably 0.07 or greater, more preferably less than 0.17, and still more preferably 0.14 or less.

The ratio (CC-1/CB-1) is a ratio of the phenol equivalent of carvacrol to the amine equivalent of bis(aminomethyl) norbornane contained in the liquid B. When the phenol equivalent of the component CC-1 is defined as Ae (CC-1) and the amine equivalent of the component CB-1 is defined as Ae (CB-1), the ratio (CC-1/CB-1) is determined by Equation (e8).

$$\text{Ratio (CC-1/CB-1)} = \text{Ae (CC-1)}/\text{Ae (CB-1)} \cdots \text{(e8)}$$

Further, in the table showing the equivalent ratios shown in FIG. 13, since the equivalent ratio of the component CB-1 is "1.0", the equivalent ratio of the component CC-1 shown in the table of FIG. 13 matches the ratio (CC-1/CB-1). Therefore, in FIG. 13, the description of the ratio (CC-1/CB-1) is omitted.

Here, it is found that there is a preferable range for the ratio (CC-1/CB-1) from the viewpoint of the viscosity other than Evaluation A and Evaluation B. In Test Example 24 in which the ratio (CC-1/CB-1) is 0.95, the temperature is increased due to the exothermic reaction when the component CC-1 and the component CB-1 are mixed. Therefore, it is found that the liquid B is required to be handled with care and thus is difficult to handle.

In addition, in Test Example 23 in which the ratio (CC-1/CB-1) is 0.01, since the amount of carvacrol (component CC-1) is small with respect to the amount of bis(aminomethyl)norbornane (component CB-1), the chemical reaction between the component CB-1 and the component CC-1 hardly occurs. As described above, the effect that the phenomenon such as gelling is unlikely to occur is exhibited even when the component CB-1 and the component CC-1 chemically react with each other and are mixed with the main agent. Therefore, when the chemical reaction between the component CB-1 and the component CC-1 hardly occurs, the component CB-1 remaining in the liquid B reacts rapidly with the epoxy resin when kneaded with the liquid A, and a phenomenon such as gelling is likely to occur. As the curing temperature increases, the curing reaction proceeds, and thus, a phenomenon such as gelling is likely to occur as the curing temperature increases.

In addition, in Test Example 24 in which the ratio of (CC-1/CB-1) is 0.95, since the amount of carvacrol (component CC-1) is large with respect to the amount of bis(aminomethyl)norbornane (component CB-1), the component CC-1 remaining in the liquid B without reacting with the component CB-1 also remains in the cured substance and may be eluted into an acidic liquid to deform the cured substance. As described above, it is found that the ratio (CC-1/CB-1) is preferably 0.35 or greater and 0.70 or less.

B7. Test 4:

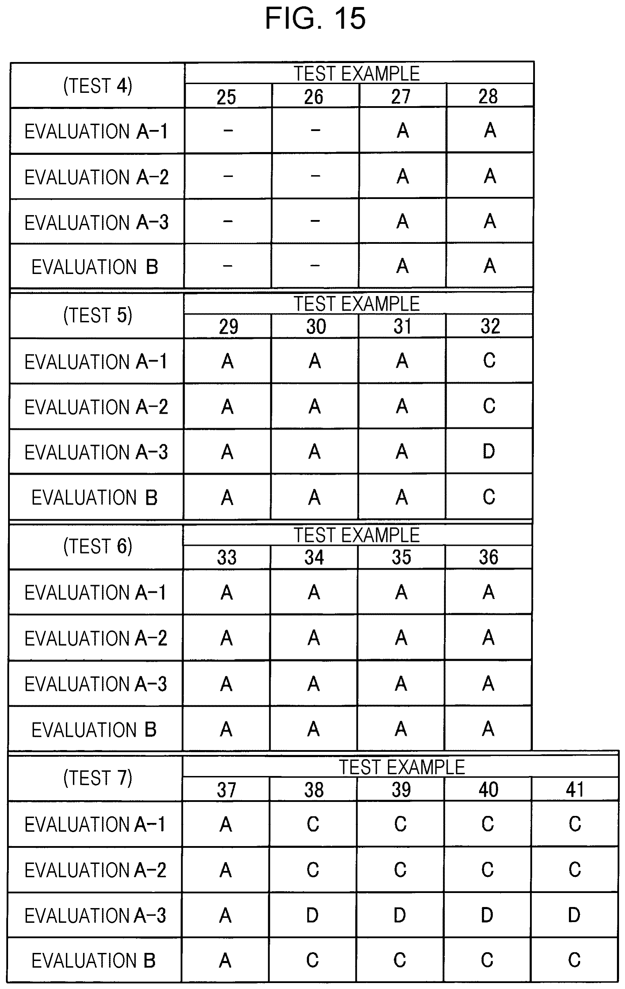

FIG. 14 is a table showing the equivalent ratios and the mass ratios of Test Example 25 to Test Example 28 of Test 4. FIG. 15 is a table collectively showing the evaluation results of Tests 4 to 7. In Test 3 described above, the ratio (CA-1/CB-1) was changed in a range of 0.05 to 0.17. As shown in FIG. 14, each of Test Examples 25 and 26 of Test 4 is different from each of Test Examples 21 and 22 of Test 3 in terms that the ratio (CA-1/CB-1) is further increased to 0.33. In Test Examples 25 and 26, the liquid B is solidified by being subjected to a heat treatment or allowed to stand. That is, since the liquid B is solidified before being applied as a glue, the liquid B cannot be used as the glue. Therefore, Evaluation A and Evaluation B were not performed. As described above, it is found that the ratio (CA-1/CB-1) in the liquid B is required to be set to less than 0.33.

In Test Examples 27 and 28 of Test 4, the liquid B contained tyrosol (component CF-1). The purpose of containing the component CF-1 in the liquid B is to increase the viscosity of the liquid B. Further, in Tests 1 to 3 described above, the liquid B contained the component CA-1 for the purpose of increasing the viscosity of the liquid B. In Test Examples 27 and 28, the total of the equivalent ratio of the component CA-1 and the equivalent ratio of the component CF-1 is set to "0.33".

In addition, when the liquid B was prepared for Test Example 28 in which the liquid B did not contain the epoxy resin (component CA-1), tyrosol (component CF-1) and bis(aminomethyl)norbornane (component CB-1) were mixed, carvacrol (component CC-1) was mixed with the prepared mixture, and the mixture was allowed to stand for the reaction at 95°C for 30 minutes as the adduct treatment 30 minutes after the mixing. Here, when the component CC-1 and the component CB-1 are mixed, a by-product is generated. As described above, in each of the test examples in which the liquid B contained the epoxy resin (component CA-1), the liquid B was prepared in a procedure of mixing the component CA-1 and the component CB-1 first and mixing the mixture with the component CC-1. In contrast to this procedure, when the component CB-1 and the component CC-1 are mixed first, a greenish by-product is generated. Even when the component CA-1 is mixed with the mixture containing the by-product, the by-product remains. As shown in this result, in a case of the configuration in which the liquid B contains the component CA-1, it is found that when the component CA-1 and the component CB-1 are mixed first, and then the component CC-1 is mixed into the mixture, the generation of a by-product can be avoided. In addition, as described above, when the component CC-1 and the component CB-1 are mixed, a by-product is generated. Even when the component CF-1 and the component CB-1 are mixed in advance and then the component CC-1 is mixed into the mixture, the generation of by-products cannot be avoided. Therefore, when the liquid B is intended to contain the component CF-1 while the generation of a by-product is avoided, a component configuration in which the liquid B contains the component CA-1 may be obtained.

As shown in the evaluation results of Test 4 of FIG. 15, in any of Test Example 27 and Test Example 28, the results of Evaluation A and Evaluation B were all the rank A. Therefore, it is found that a cured substance having excellent rapid curability and acid resistance can be prepared when the liquid B contains at least one of the component CA-1 and the component CF-1.

In addition, it is found that when the equivalent ratio of tyrosol (component CF-1) contained in the liquid B is at least 0.33 or less, the liquid B is not solidified even in a case where the liquid A and the liquid B are kneaded. Specifically, it is

found that when the ratio (CF-1/CB-1) which is the ratio of the phenol equivalent of tyrosol to the amine equivalent of bis(aminomethyl)norbornane contained in the liquid B is at least 0.33 or less, a glue that is not solidified during kneading of the liquid A and the liquid B while the viscosity of the liquid B is increased can be prepared. Further, the phenol equivalent of tyrosol denotes the equivalent of tyrosol shown in FIG. 6. As described above, it is found that the viscosity of the liquid B can be increased by allowing the liquid B to contain the component CA-1 or the component CF-1, which is preferable.

B8. Test 5:

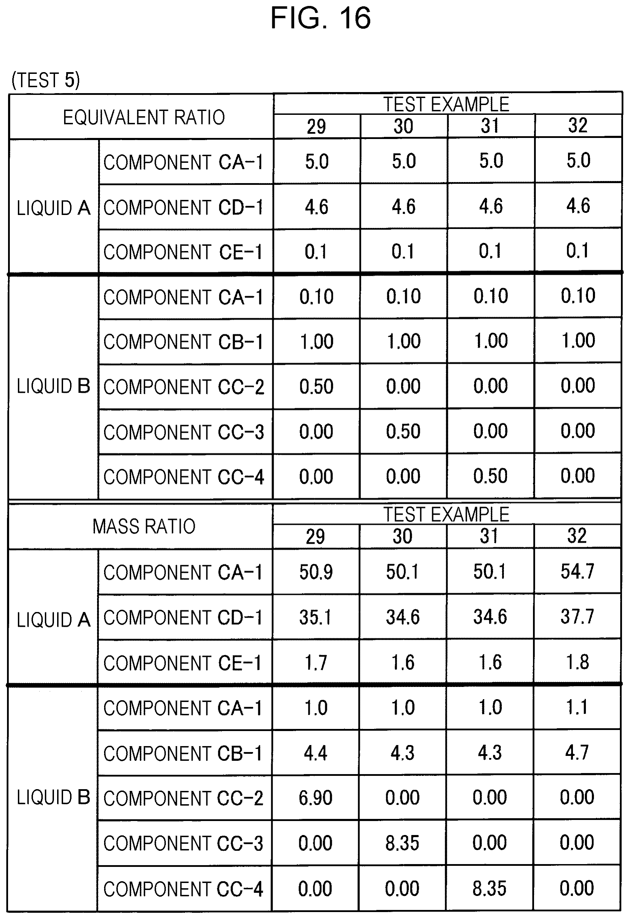

FIG. 16 is a table showing the equivalent ratios and the mass ratios of Test Examples 29 to 32 of Test 5. In Tests 1 to 4 described above, the phenol of the alkylphenol (a) or the phenol of the alkylphenol (b) contained in the liquid B is carvacrol (component CC-1). In Test Examples 29 to 31 of Test 5, the liquid B contained any one of the component CC-2, the component CC-3, and the component CC-4 instead of the component CC-1. In Test Example 32 of Test 5, the liquid B contained neither the phenol of the alkylphenol (a) nor the phenol of the alkylphenol (b).

As shown in the evaluation results of Test 5 of FIG. 15, in Test Examples 27 to 29 in which the liquid B contained any one of the component CC-2, the component CC-3, and the component CC-4, the evaluation results of both the evaluation A and the evaluation B were the rank A. In addition, the evaluation results of Evaluation A and Evaluation B of Test Example 32 in which the liquid B contained neither the phenol of the alkylphenol (a) nor the phenol of the alkylphenol (b) described above were the rank C or the rank D. As shown in the results, it is found that a glue having rapid curability and acid resistance can be prepared by allowing the liquid B to contain the phenol of the alkylphenol (a) or the phenol of the alkylphenol (b). In addition, it is found that carvacrol (component CC-1), 4-ethylphenol (component CC-2), ortho-cymen-5-ol (component CC-3), and thymol (component CC-4) can be used as the phenol of the alkylphenol (a) described above or the phenol of the alkylphenol (b) described above.

In addition, it is found that a component that is preferable as the phenol of the alkylphenol (a) or the phenol of the alkylphenol (b) contained in the liquid is present from the viewpoint other than the evaluation A and the evaluation B. Among the components CC-1 to CC-4, the components that undergo an exothermic reaction with bis(aminomethyl) norbornane (component CB-1) when mixed are the component CC-1 and the component CC-2. Therefore, the component CC-1 and the component CC-2 that can omit the heat treatment for promoting the reaction with the component CB-1 are preferable from the viewpoint that the heat treatment is not troublesome. Further, the powdery component CC-2, which is a solid at room temperature, reacted by being melted and dissolved in the component CB-1, which is a liquid at room temperature, and being stirred manually.

The component CC-3 and the component CC-4, which are solids at room temperature, did not exothermically react with the component CB-1 when mixed. Therefore, each of the component CC-3 and the component CC-4 reacted by being mixed with the component CB-1 and performing a heat treatment.

Further, since the component CC-1 is a liquid at room temperature, the component CC-1 is easily mixed with the component CB-1 which is a liquid at room temperature, and is suitable for reacting with the component CB-1. In addition, the component CC-1 is known as an essential oil component extracted from the plant oregano and emits an odor that is easily preferred by humans, and is thus preferable from the viewpoint of being used in a step of producing a glue.

Further, as described above, it is possible that the heat treatment for promoting the reaction with the component CB-1 is not performed on the component CC-1 and the component CC-2, but a test of performing this heat treatment was separately performed in addition to the above-described tests. As a result, in Evaluation A-2, the result of the component CC-1 was more satisfactory than the result of the component CC-2. The component CC-1 is a dialkylphenol in which two hydrogens of a benzene ring are substituted with an alkyl group. The component CC-2 is a monoalkylphenol in which one hydrogen of a benzene ring is substituted with an alkyl group. As described above, it is found that the phenol of the alkylphenol (a) or the phenol of the alkylphenol (b) is preferably carvacrol or 4-ethylphenol and more preferably carvacrol.

B9. Test 6:

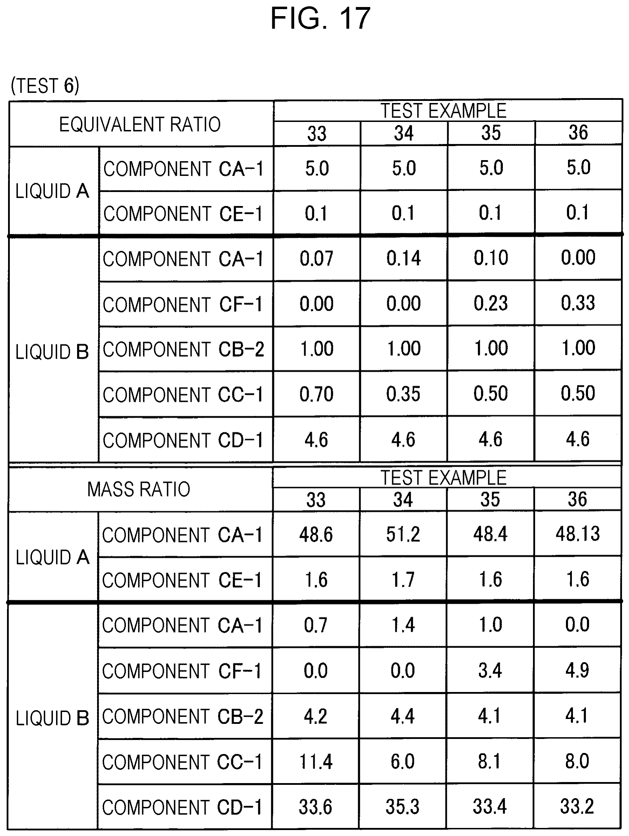

FIG. 17 is a table showing the equivalent ratios and the mass ratios of Test Examples 29 to 32 of Test 6. As described in Test 2, the occurrence of cracks in the cured substance can be suppressed by allowing the glue to contain 3,4-dihydrocoumarin (component CE-1). Meanwhile, the component CE-1 has a property of promoting a chemical reaction. Therefore, when the liquid A contains the component CE-1, the component CE-1 and the polymer of an aromatic amine (component CD-1) react with each other to be solidified at room temperature in several months. Therefore, the component configuration in which the liquid A can be stored at room temperature for a long period of time was examined. As a result of the preliminary test in which the liquid B contained the component CE-1, it is found that the component CE-1 and the component CB-1 were solidified when mixed. In addition, it is found that when the component CB-1 and the component CC-1 are mixed and the component CD-1 is mixed with the prepared mixture, the mixture is solidified at an early stage.

Therefore, in Test 6, the liquid B contained the polymer of an aromatic amine (component CD-1) instead of the component CE-1. When the liquid B was prepared, each component except for the component CD-1 was mixed, and the

mixture was allowed to stand for the reaction at 95°C for 30 minutes as the adduct treatment 30 minutes after the mixing. Thereafter, the component CD-1 was mixed with the mixture. It is found that the liquid B prepared in this manner can be stored at room temperature for a long period of time. In addition, it is found that the liquid A can also be stored for a long period of time at room temperature.

As shown in Test 6 of FIG. 15, the results of both Evaluation A and Evaluation B were the rank A in all of Test Examples 33 to 36. In Test 6, since the component configuration of the glue itself is the same as that of Test Example 15, Test Example 16, Test Example 27, and Test Example 28, the same evaluation results as the evaluation results thereof are obtained. As described above, it is found that both the liquid A and the liquid B can be stored at room temperature for a long period of time by allowing the liquid B instead of the liquid A to contain the polymer of an aromatic amine (component CD-1).

B10. Test 7:

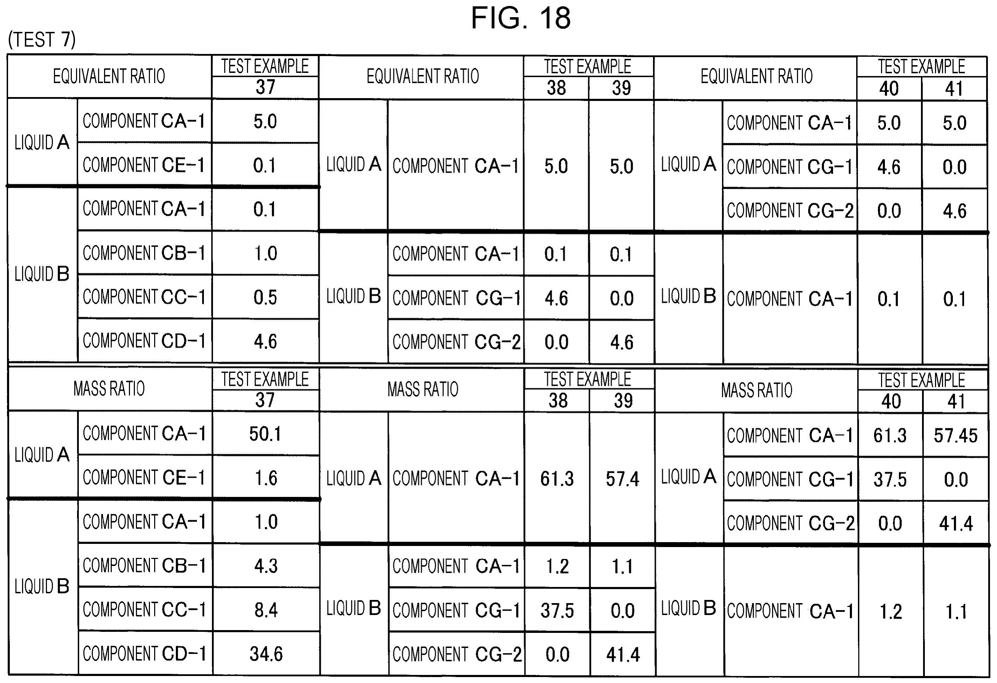

FIG. 18 is a table showing the equivalent ratios and the mass ratios of Test Examples 37 to 41 of Test 7. Test Example 37 has a configuration in which the liquid B contains the polymer of an aromatic amine (component CD-1) similarly to Test 6 and is an example in which the equivalent ratio of the component CA-1 in the liquid B is set to "0.1". A method of preparing the liquid B is the same as in Test Example 6. As shown in the evaluation results of Test Example 7 of FIG. 15, the evaluation results of Test Example 37 were the rank A in both Evaluation A and Evaluation B. Test Example 37 is the best mode from the viewpoints of the rapid curability, the acid resistance, the storage stability, and the like.

As shown in FIG. 18, in Test Examples 38 and 39, the liquid B contains the component CG-2, which is an aliphatic amine, or the component CG-1, which is an aromatic amine, instead of the polymer of an aromatic amine (component CD-1). In addition, in Test Examples 38 and 39, the liquid B contains neither bis(aminomethyl)norbornane (component CB-1) nor carvacrol (component CC-1), which are the characteristics of the present application. In addition, in Test Examples 38 and 39, the liquid A does not contain 3,4-dihydrocoumarin (component CE-1). When the liquid B is prepared, each component except for the component CG-1 and the component CG-2 was mixed, and the mixture was allowed to stand for the reaction at 95°C for 30 minutes as the adduct treatment 30 minutes after the mixing. Thereafter, the component CG-1 or the component CG-2 was mixed with the mixture.

As shown in the evaluation results of Test 7 of FIG. 15, the evaluation results in both Evaluation A and Evaluation B were not satisfactory in Test Examples 38 and 39. When Test Example 38 and Test Example 39 are compared with Test Example 37, it is found that a glue having excellent rapid curability and acid resistance can be prepared by allowing the liquid B to contain the component CB-1, the component CC-1, and the component CD-1.

As shown in FIG. 18, Test Examples 40 and 41 are different from Test Examples 38 and 39 in terms that the liquid A contained the component CG-1 and the component CG-2, which were contained in the liquid B in Test Examples 38 and 39. As shown in the evaluation results of Test 7 of FIG. 15, the evaluation results of Test Examples 40 and 41 were the same as the evaluation results of Test Examples 38 and 39. The component CG-2, which is an aromatic amine that is not a polymer, has a melting point of about 85°C and is a solid at room temperature. Therefore, in Test Examples 40 and 41, the component CG-2 was melted by performing a heat treatment on the liquid B at 95°C for 2 hours, and the liquid B was kneaded with the liquid A and cured. It is considered that the reason why the evaluation results of Test Examples 40 and 41 were poor is that the activity of the component CG-2 was low at a curing temperature of 80°C, the same curing reaction as the curing reaction for the component CD-1 was not carried out, and the acid resistance was not imparted to the cured substance.

B11. Test 8:

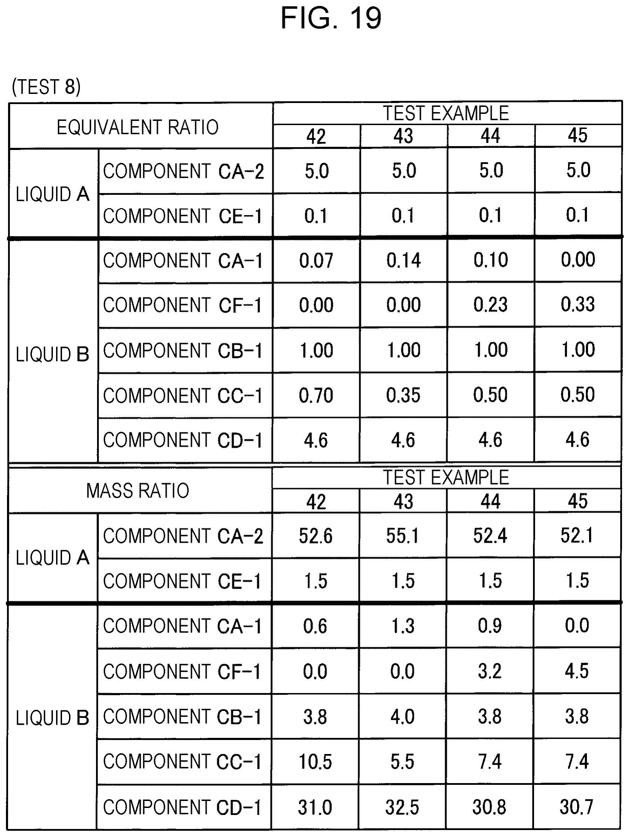

FIG. 19 is a table showing the equivalent ratios and the mass ratios of Test Examples 42 to 45 of Test 8. Test 8 is different from Test Examples 25 to 28 of Test 4 in terms that the component CA-1 contained in liquid A is changed to the component CA-2.

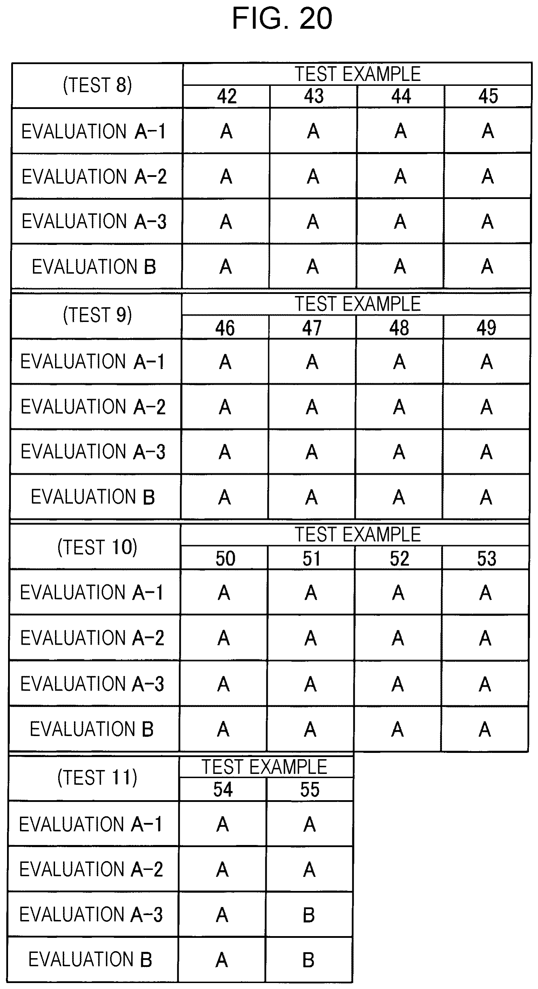

FIG. 20 is a table showing the evaluation results of Tests 8 to 11. As shown in the evaluation results of Test 8 in FIG. 20, the evaluation results of both Evaluation A and Evaluation B from Test 42 to Test 45 were the rank A. As described above, it is found that the same results as in each of the tests described above can be obtained even when the component CA-1 is replaced with the component CA-2 as the epoxy resin contained in the liquid A.

B12. Test 9:

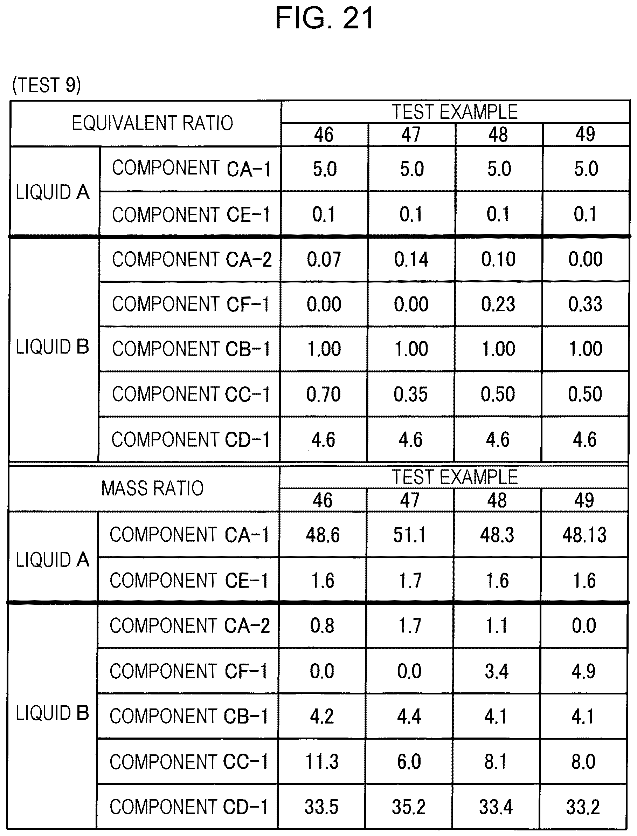

FIG. 21 is a table showing the equivalent ratios and the mass ratios of Test Examples 46 to 49 of Test 9. Test 9 is different from Test Examples 25 to 28 of Test 4 in terms that the component CA-1 contained in the liquid B is changed to the component CA-2.

As shown in the evaluation results of Test 9 in FIG. 20, the evaluation results in both Evaluation A and Evaluation B of Tests 46 to 49 were the rank A. As described above, it is found that the same results as in each of the tests described

above are obtained even when the component CA-1 is replaced with the component CA-2 as the epoxy resin contained in the liquid B.

B13. Test 10:

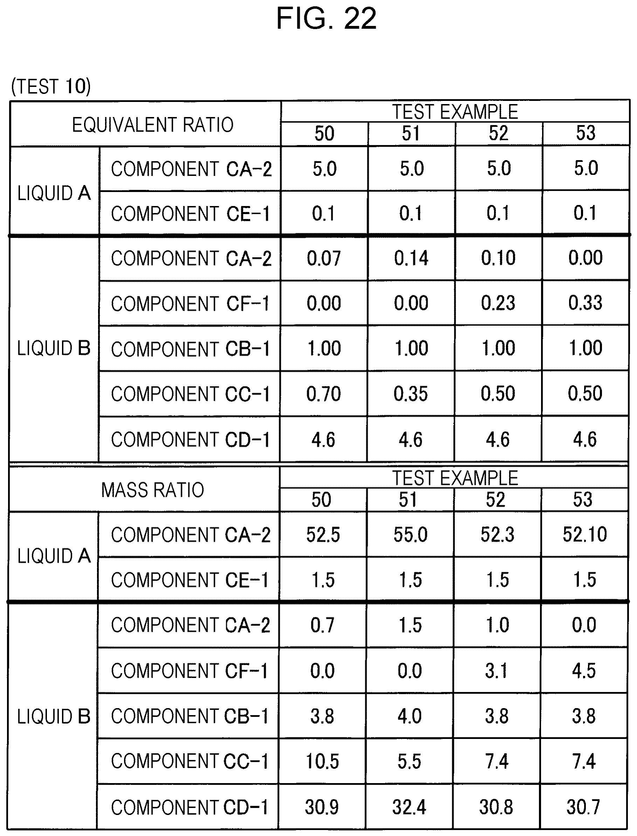

FIG. 22 is a table showing the equivalent ratios and the mass ratios of Test Examples 50 to 53 of Test 10. Test 10 is different from Test Examples 25 to 28 of Test 4 in terms that the component CA-1 contained in the liquid A is changed to the component CA-2 and the component CA-1 contained in the liquid B is changed to the component CA-2.
As shown in the evaluation results of Test 10 in FIG. 20, the evaluation results in both Evaluation A and Evaluation B of Tests 50 to 53 were the rank A. As described above, it is found that the same results as in each of the tests described above are obtained even when the component CA-1 is replaced with the component CA-2 as the epoxy resin contained in each of the liquid A and the liquid B.

B14. Test 11:

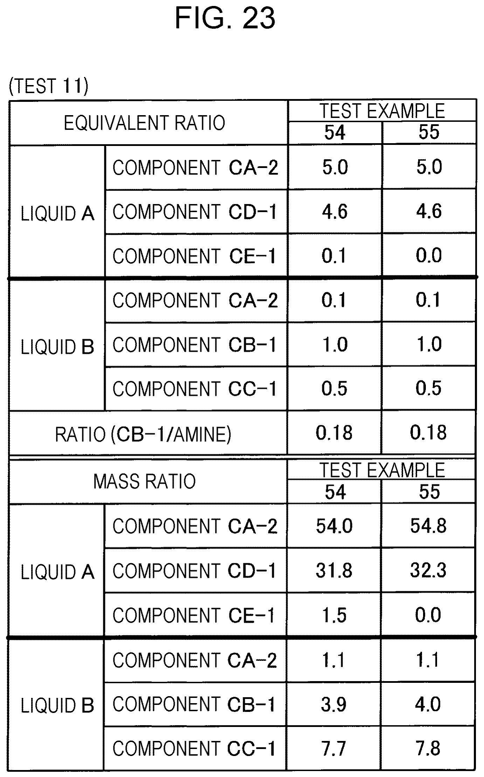

FIG. 23 is a table showing the equivalent ratios and the mass ratios of Test Examples 54 and 55 of Test 11. As shown in FIG. 23, Test Example 54 is different from Test Example 5 of Test 1 in terms that the component CA-1 contained in each of the liquid A and the liquid B is changed to the component CB-1. Test Example 55 is different from Test Example 12 of Test 2 in terms that the component CA-1 contained in each of the liquid A and the liquid B is changed to the component CB-1.
As shown in the evaluation results of Test 11 in FIG. 20, the evaluation results of Test Example 54 were the same as the evaluation results of Test Example 5. In addition, the evaluation results of Test Example 55 were the same as the evaluation results of Test Example 12. As described above, it is found that satisfactory evaluation results were obtained with a ratio (CB-1/amine) of 0.18 in a case of using the component CB-1 in both a case where the glue contained 3,4-dihydrocoumarin (component CE-1) and a case where the glue did not contain 3,4-dihydrocoumarin (component CE-1).

B15. Test 12:

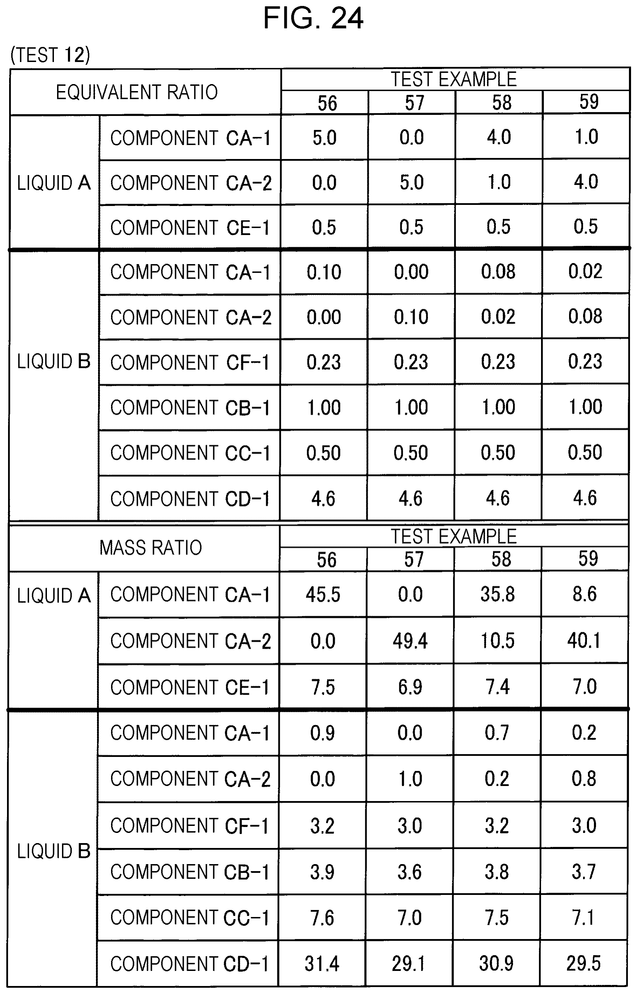

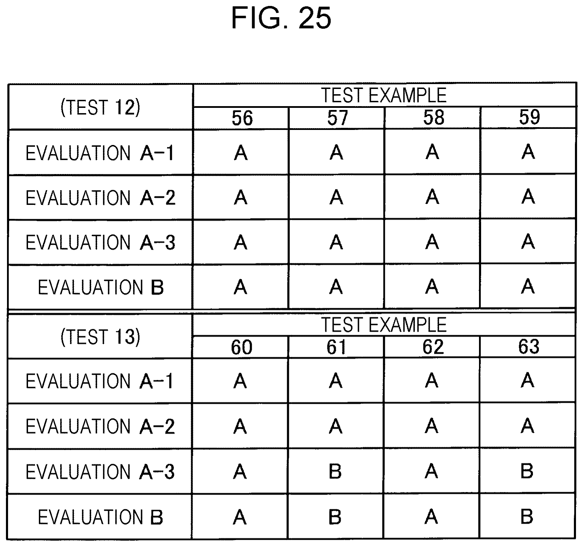

FIG. 24 is a table showing the equivalent ratios and the mass ratios of Test Examples 56 to 59 of Test 12. FIG. 25 is a table collectively showing the evaluation results of Test 12 and Test 13. As shown in FIG. 24, Test Example 56 is different from Test Example 44 of Test 8 in terms that the equivalent ratio of 3,4-dihydrocoumarin (component CE-1) is set to "0.5". Test Example 57 is different from Test Example 56 in terms that the component CA-1 contained in each of the liquid A and the liquid B is changed to the component CB-1. Test Examples 58 and 59 are different from Test Example 56 in terms that the liquid A and the liquid B contain both the component CA-1 and the component CB-1 as the epoxy resin contained in each of the liquid A and the liquid B.
As shown in the evaluation results of Test 12 in FIG. 25, the evaluation results in both Evaluation A and Evaluation B in any of Test Examples 56 to 59 were the rank A. As described above, it is found that even when the equivalent ratio of 3,4-dihydrocoumarin (component CE-1) is increased to "0.5", a glue having excellent acid resistance and rapid curability can be prepared.

B16. Test 13:

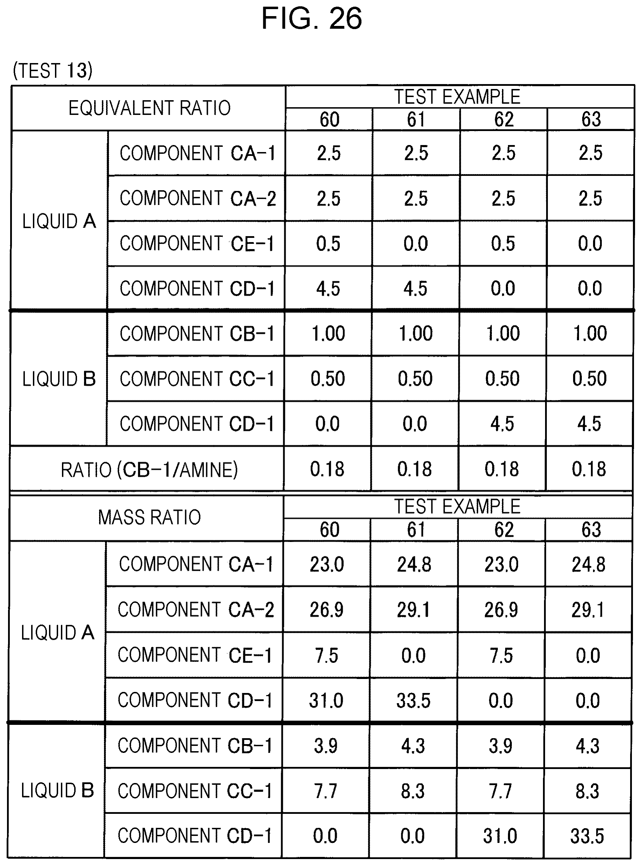

FIG. 26 is a table showing the equivalent ratios and the mass ratios of Test Examples 60 to 63 of Test 13. As shown in FIG. 26, Test Example 60 is different from Test Example 5 of Test 1 in terms that the total equivalent ratio of the two components of the component CA-1 and the component CA-2 contained in the liquid A is set to "0.5", the equivalent ratio of the polymer of an aromatic amine (component CD-1) is set to "4.5", and the liquid B does not contain the component CA-1. Test Example 61 is different from Test Example 12 of Test 2 in terms that the total equivalent ratio of the two components of the component CA-1 and the component CA-2 contained in the liquid A is set to "0.5", the equivalent ratio of the polymer of an aromatic amine (component CD-1) is set to "4.5", and the liquid B does not contain the component CA-1.
As shown in the results of Test 13 in FIG. 25, the evaluation results of Test Example 60 are the same as the evaluation results of Test Example 5. The evaluation results of Test Example 61 are the same as the evaluation results of Test Example 12. Therefore, it is found that the evaluation results when the liquid B does not contain the component CA-1 are the same as the evaluation results when the liquid B contains the component CA-1. Here, as described above, when the liquid B does not contain an epoxy resin, the viscosity of the liquid B is low, and thus there is a concern that the efficiency in the production step may be decreased. Further, in Example 60, since the equivalent ratio of the component CE-1 contained in the liquid A is "0.5", which is large, the viscosity of the liquid A is increased. Therefore, the heating time for the adduct treatment of the liquid A may be shortened.
As shown in FIG. 26, Test Example 62 is different from Test Example 60 in terms that the liquid B instead of the

liquid A contains the polymer of an aromatic amine (component CD-1). Test Example 63 is different from Test Example 61 in terms that the liquid B instead of the liquid A contains the polymer of an aromatic amine (component CD-1).

As shown in the results of Test 13 in FIG. 25, the evaluation results of Test Example 62 are the same as the evaluation results of Test Example 60. The evaluation results of Test Example 63 are the same as the evaluation results of Test Example 61. Therefore, it is found that the evaluation results when the liquid B contains the component CD-1 are the same as the evaluation results when the liquid A contains the component CD-1. Here, when the liquid B contains the polymer of an aromatic amine (component CD-1), the viscosity of the liquid B is increased and becomes substantially the same as the viscosity of the liquid A. Therefore, a glue in which the liquid A and the liquid B are easily kneaded can be prepared by allowing the liquid B to contain the polymer of an aromatic amine (component CD-1).

In Test Examples 61 and 63, the glue does not contain 3,4-dihydrocoumarin (component CE-1), but the results of Evaluation A-2 are the rank B, and the tensile breaking strength is 20 MPa or greater. Therefore, the examples are practical.

C. Other Embodiments:

(C1) In the above-described embodiment, the embodiment in which the two-liquid mixed glue is applied to the liquid ejecting head 30 is described, but the member to which the two-liquid mixed glue is applied is not limited to the liquid ejecting head 30. Further, in the above-described embodiment, the glue does not contain a filler, but may contain a filler for adjusting the viscosity.

Further, the two-liquid mixed glue used for producing the liquid ejecting head 30 is not limited to the above-described embodiment. Specifically, the epoxy resin containing no bisphenol is not limited to the tetrafunctional glycidyl amine type epoxy resin. The tetrafunctional glycidyl amine type epoxy resin is not limited to N,N,N',N'-tetraglycidyl-m-xylenediamine or 4,4'-methylenebis(N,N-diglycidylaniline). The epoxy resin containing no bisphenol may contain a plurality of kinds of epoxy resins. In addition, the polymer of an aromatic amine is not limited to a 2-ethylaniline-formaldehyde polymerizable compound, and may be, for example, a 2-ethyl- 6-methylaniline-formaldehyde polymerizable compound. Even when these components are used, each of these components has the same chemical properties as the chemical properties of the corresponding components of the above-described embodiment, and thus a two-liquid mixed glue that exhibits the same effects as the effects of the above-described embodiment can be prepared.

D. Other Aspects:

The present disclosure is not limited to the above-described embodiments, and can be realized in various configurations within the scope not departing from the concept of the present disclosure. For example, technical features in the embodiments corresponding to technical features in each aspect to be described below can be replaced or combined as appropriate to solve some or all of the problems described above, or to achieve some or all of the effects described above. Further, when the technical features are not described as essential in the present specification, the technical features can be appropriately deleted.

(1) According to a first aspect of the present disclosure, there is provided a liquid ejecting head that ejects a liquid from a nozzle. The liquid ejecting head includes a first member; a second member; and a cured substance of a two-liquid mixed glue that bonds the first member and the second member, in which the two-liquid mixed glue includes a liquid A containing a main agent that contains an epoxy resin containing no bisphenol, a liquid B containing at least one of 2,5-bis(aminomethyl)bicyclo[2.2.1]heptane and 2,6-bis(aminomethyl)bicyclo[2.2.1]heptane, and an alkylphenol, and a polymer of an aromatic amine contained in the liquid A or the liquid B, and the alkylphenol is an alkylphenol (a) containing at least one ethyl group or an alkylphenol (b) in which an alkyl group has 1 to 3 carbon atoms and which contains at least one methyl group and one isopropyl group. According to this aspect, the environmental load can be reduced by using the epoxy resin containing no bisphenol as the main agent. In addition, by allowing the curing agent to contain at least one of 2,5-bis(aminomethyl)bicyclo[2.2.1]heptane and 2,6-bis(aminomethyl)bicyclo[2.2.1]heptane and the alkylphenol(a) or the alkylphenol (b) described above, when the curing agent is mixed with the epoxy resin of the main agent at room temperature, a phenomenon such as gelling can be suppressed, and the glue is rapidly cured during curing at high temperatures. Therefore, the film thickness of the curing agent can be made uniform and the reliability can be improved without moving until the glue applied to the gap between the first member and the second member is cured. In addition, the acid resistance of the cured substance can be improved by using the polymer of an aromatic amine.

(2) In the liquid ejecting head of the above-described aspect (1), the alkylphenol may contain at least one of 4-ethylphenol and carvacrol. According to this aspect, the chemical reaction between the alkylphenol and at least one of 2,5-bis(aminomethyl)bicyclo[2.2.1]heptane and 2,6-bis(aminomethyl)bicyclo[2.2.1]heptane can be completed without performing a heat treatment.

(3) In the liquid ejecting head of the above-described aspect (2), the alkylphenol may be the carvacrol. In this aspect, carvacrol emit an odor that is easily preferred by humans, and thus is preferable from the viewpoint of being used in a step of producing a glue.

(4) In the liquid ejecting head of the above-described aspect (3), the ratio of a phenol equivalent of the carvacrol to an amine equivalent of the 2,5-bis(aminomethyl)bicyclo[2.2.1]heptane and the 2,6-bis(aminomethyl)bicyclo[2.2.1]heptane contained in the liquid B may be 0.35 or greater and 0.70 or less. According to this aspect, since the liquid B has an appropriate viscosity, the liquid A and the liquid B can be easily kneaded, and a phenomenon such as gelling can be suppressed. In addition, heat is generated when any of 2,5-bis(aminomethyl)bicyclo[2.2.1]heptane and 2,6-bis(aminomethyl)bicyclo[2.2.1]heptane reacts with carvacrol, but the temperature of the liquid B is not extremely increased, and thus a glue that is easy to handle can be provided.

(5) In the liquid ejecting head of any one of the above-described aspects (1) to (4), the liquid B may contain at least one of the epoxy resin containing no bisphenol and tyrosol. According to this aspect, since the liquid B has an appropriate viscosity, the liquid A and the liquid B can be easily kneaded.

(6) In the liquid ejecting head of the above-described aspect (5), the epoxy resin containing no bisphenol, which is contained in the liquid B, may contain a tetrafunctional glycidyl amine type epoxy resin. According to this aspect, a glue having a low environmental load can be provided.

(7) In the liquid ejecting head of the above-described aspect (6), the tetrafunctional glycidyl amine type epoxy resin may include at least one of N,N,N',N'-tetraglycidyl-m-xylenediamine and 4,4'-methylenebis(N,N-diglycidylaniline).

(8) In the liquid ejecting head of the above-described aspect (6) or (7), the ratio of the epoxy equivalent of the tetrafunctional glycidyl amine type epoxy resin contained in the liquid B to the amine equivalent of the 2,5-bis(aminomethyl)bicyclo[2.2.1]heptane and the 2,6-bis(aminomethyl)bicyclo[2.2.1]heptane contained in the liquid B may be 0.14 or less. According to this aspect, even after the liquid B is subjected to the adduct treatment, the viscosity of the liquid B can be set to be appropriately small, and a glue that is easy to handle can be prepared.

(9) In the liquid ejecting head of the above-described aspect (8), the ratio of the epoxy equivalent of the tetrafunctional glycidyl amine type epoxy resin contained in the liquid B to the amine equivalent of the 2,5-bis(aminomethyl)bicyclo[2.2.1]heptane and the 2,6-bis(aminomethyl)bicyclo[2.2.1]heptane contained in the liquid B may be 0.07 or greater.

According to this aspect, the viscosity of the liquid B can be set to be appropriate large, and a glue that is easy to handle can be prepared.

(10) In the liquid ejecting head of any one of the above-described aspects 1 to 9, a ratio of an amine equivalent of the 2,5-bis(aminomethyl)bicyclo[2.2.1]heptane and the 2,6-bis(aminomethyl)bicyclo[2.2.1]heptane contained in the liquid B to an amine equivalent of all amines contained in the two-liquid mixed glue may be 0.22 or less. According to this aspect, a glue having excellent acid resistance can be provided.

(11) In the liquid ejecting head of the above-described aspect (10), the ratio of the amine equivalent of the 2,5-bis(aminomethyl)bicyclo[2.2.1]heptane and the 2,6-bis(aminomethyl)bicyclo[2.2.1]heptane contained in the liquid B to the amine equivalent of all amines contained in the two-liquid mixed glue may be 0.13 or greater. According to this aspect, a glue having excellent rapid curability can be provided.

(12) In the liquid ejecting head of any one of the above-described aspects (1) to (12), the liquid A may contain 3,4-dihydrocoumarin. According to this aspect, a change in color of the glue to brown can be prevented even when the glue comes into contact with a liquid having acid resistance, and occurrence of cracks can be suppressed. Further, a glue having excellent rapid curability can be provided.

(13) In the liquid ejecting head of the above-described aspect (12), the liquid B may contain the polymer of the aromatic amine. According to this aspect, the main agent can be stored at room temperature.

(14) In the liquid ejecting head of any one of the above-described aspects (1) to (13), the epoxy resin containing no bisphenol, which is contained in the liquid A, may contain a tetrafunctional glycidyl amine type epoxy resin. According to this aspect, a glue having a low environmental load can be provided.

(15) In the liquid ejecting head of the above-described aspect (14), the tetrafunctional glycidyl amine type epoxy resin may contain at least one of N,N,N',N'-tetraglycidyl-m-xylenediamine and 4,4'-methylenebis(N,N-diglycidylaniline).

(16) In the liquid ejecting head of any one of the above-described aspects (1) to (15), the polymer of an aromatic amine may contain a 2-ethylaniline-formaldehyde polymerizable compound.

(17) In the liquid ejecting head of any one of the above-described aspects (1) to (16), each of the first member and the second member may define a flow path through which the liquid flows, the flow path communicating with the nozzle, and the cured substance may liquid-tightly couples a flow path of the first member and a flow path of the second member. According to this aspect, the cured substance has excellent acid resistance and rapid curability, and thus a liquid ejecting head having high reliability can be provided.

(18) In the liquid ejecting head of any one of the above-described aspects (1) to (17), the alkylphenol (a) may be an alkylphenol represented by Formula (1) (where $R_1$, $R_2$, and $R_3$ in Formula (1) represent hydrogen or an ethyl group,

and at least one of $R_1$, $R_2$, and $R_3$ represents an ethyl group), and the alkylphenol (b) may be an alkylphenol represented by Formula (2) (where $R_1$, $R_2$, $R_3$, $R_4$, and $R_5$ in Formula (2) represent hydrogen or an alkyl group having 1 to 3 carbon atoms, at least one of $R_1$, $R_2$, $R_3$, $R_4$, and $R_5$ represents a methyl group, and at least one of $R_1$, $R_2$, $R_3$, $R_4$, and $R_5$ represents an isopropyl group).

(19) According to a second aspect of the present disclosure, there is provided a two-liquid mixed glue. The two-liquid mixed glue includes a liquid A containing a main agent that contains an epoxy resin containing no bisphenol; a liquid B containing at least one of 2,5-bis(aminomethyl)bicyclo[2.2.1]heptane and 2,6-bis(aminomethyl)bicyclo[2.2.1]heptane, and an alkylphenol; and a polymer of an aromatic amine contained in the liquid A or the liquid B, in which the alkylphenol is an alkylphenol (a) containing at least one ethyl group or an alkylphenol (b) in which an alkyl group has 1 to 3 carbon atoms and which contains at least one methyl group and one isopropyl group.

(20) In the two-liquid mixed glue of the above-described aspect (19), the alkylphenol (a) may be an alkylphenol represented by Formula (1) (where $R_1$, $R_2$, and $R_3$ in Formula (1) represent hydrogen or an ethyl group, and at least one of $R_1$, $R_2$, and $R_3$ represents an ethyl group), and the alkylphenol (b) may be an alkylphenol represented by Formula (2) (where $R_1$, $R_2$, $R_3$, $R_4$, and $R_5$ in Formula (2) represent hydrogen or an alkyl group having 1 to 3 carbon atoms, at least one of $R_1$, $R_2$, $R_3$, $R_4$, and $R_5$ represents a methyl group, and at least one of $R_1$, $R_2$, $R_3$, $R_4$, and $R_5$ represents an isopropyl group).

(21) In the two-liquid mixed glue of the above-described aspect (19) or (20), the liquid A may contain 3,4-dihydrocoumarin. According to this aspect, a change in color of the glue to brown can be prevented even when the glue comes into contact with a liquid having acid resistance, and occurrence of cracks can be suppressed.

## Claims

**1.** A liquid ejecting head configured to eject a liquid from a nozzle, the liquid ejecting head comprising:

a first member;
a second member; and
a cured substance of a two-liquid mixed glue that bonds the first member and the second member, wherein the two-liquid mixed glue includes

a liquid A containing a main agent that contains an epoxy resin containing no bisphenol,
a liquid B containing at least one of 2,5-bis(aminomethyl)bicyclo[2.2.1]heptane and 2,6-bis(aminomethyl)bicyclo[2.2.1]heptane, and an alkylphenol, and
a polymer of an aromatic amine contained in the liquid A or the liquid B, and

the alkylphenol is an alkylphenol (a) containing at least one ethyl group or an alkylphenol (b) in which an alkyl group has 1 to 3 carbon atoms and which contains at least one methyl group and one isopropyl group.

**2.** The liquid ejecting head according to claim 1, wherein
the alkylphenol contains at least one of 4-ethylphenol and carvacrol.

**3.** The liquid ejecting head according to claim 2, wherein
the alkylphenol is the carvacrol.

**4.** The liquid ejecting head according to claim 3, wherein
a ratio of a phenol equivalent of the carvacrol to an amine equivalent of the 2,5-bis(aminomethyl)bicyclo[2.2.1]heptane and the 2,6-bis(aminomethyl)bicyclo[2.2.1]heptane contained in the liquid B is 0.35 or greater and 0.70 or less.

**5.** The liquid ejecting head according to any one of claims 1 to 4, wherein
the liquid B contains at least one of the epoxy resin containing no bisphenol and tyrosol.

**6.** The liquid ejecting head according to claim 5, wherein
the epoxy resin containing no bisphenol, which is contained in the liquid B, contains a tetrafunctional glycidyl amine type epoxy resin.

**7.** The liquid ejecting head according to claim 6, wherein
the tetrafunctional glycidyl amine type epoxy resin includes at least one of N,N,N',N'-tetraglycidyl-m-xylenediamine and 4,4'-methylenebis(N,N-diglycidylaniline).

8. The liquid ejecting head according to claim 6 or 7, wherein a ratio of an epoxy equivalent of the tetrafunctional glycidyl amine type epoxy resin contained in the liquid B to an amine equivalent of the 2,5-bis(aminomethyl)bicyclo[2.2.1]heptane and the 2,6-bis(aminomethyl)bicyclo[2.2.1]heptane contained in the liquid B is 0.14 or less.

9. The liquid ejecting head according to claim 8, wherein the ratio of the epoxy equivalent of the tetrafunctional glycidyl amine type epoxy resin contained in the liquid B to the amine equivalent of the 2,5-bis(aminomethyl)bicyclo[2.2.1]heptane and the 2,6-bis(aminomethyl)bicyclo[2.2.1]heptane contained in the liquid B is 0.07 or greater.

10. The liquid ejecting head according to any one of claims 1 to 9, wherein a ratio of an amine equivalent of the 2,5-bis(aminomethyl)bicyclo[2.2.1]heptane and the 2,6-bis(aminomethyl)bicyclo[2.2.1]heptane contained in the liquid B to an amine equivalent of all amines contained in the two-liquid mixed glue is 0.22 or less.

11. The liquid ejecting head according to claim 10, wherein the ratio of the amine equivalent of the 2,5-bis(aminomethyl)bicyclo[2.2.1]heptane and the 2,6-bis(aminomethyl)bicyclo[2.2.1]heptane contained in the liquid B to the amine equivalent of all amines contained in the two-liquid mixed glue is 0.13 or greater.

12. The liquid ejecting head according to any one of claims 1 to 11, wherein the liquid A contains 3,4-dihydrocoumarin.

13. The liquid ejecting head according to claim 12, wherein the liquid B contains the polymer of the aromatic amine.

14. The liquid ejecting head according to any one of claims 1 to 13, wherein

the alkylphenol (a) is an alkylphenol represented by Formula (1), and the alkylphenol (b) is an alkylphenol represented by Formula (2),

[Chem. 1]

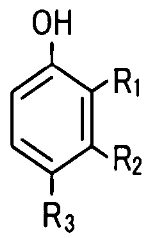

(1)

(where $R_1$, $R_2$, and $R_3$ in Formula (1) represent hydrogen or an ethyl group, and at least one of $R_1$, $R_2$, and $R_3$ represents an ethyl group),

[Chem. 2]

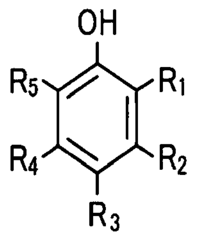

(2)

(where $R_1$, $R_2$, $R_3$, $R_4$, and $R_5$ in Formula (2) represent hydrogen or an alkyl group having 1 to 3 carbon atoms, at least one of $R_1$, $R_2$, $R_3$, $R_4$, and $R_5$ represents a methyl group, and at least one of $R_1$, $R_2$, $R_3$, $R_4$, and $R_5$ represents an isopropyl group).

**15.** A two-liquid mixed glue comprising:

a liquid A containing a main agent that contains an epoxy resin containing no bisphenol;
a liquid B containing at least one of 2,5-bis(aminomethyl)bicyclo[2.2.1]heptane and 2,6-bis(aminomethyl)bicyclo[2.2.1]heptane, and an alkylphenol; and
a polymer of an aromatic amine contained in the liquid A or the liquid B, wherein the alkylphenol is an alkylphenol (a) containing at least one ethyl group or an alkylphenol (b) in which an alkyl group has 1 to 3 carbon atoms and which contains at least one methyl group and one isopropyl group.

FIG. 1

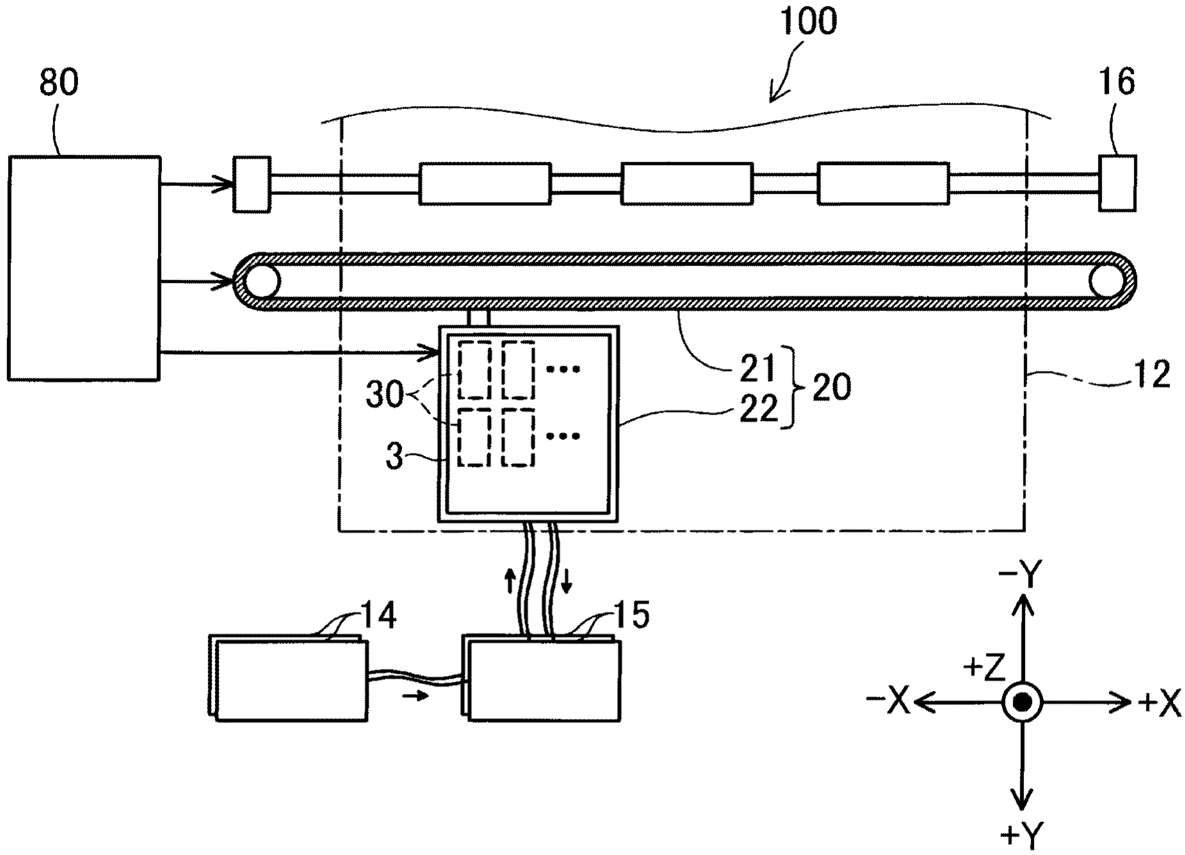

FIG. 2

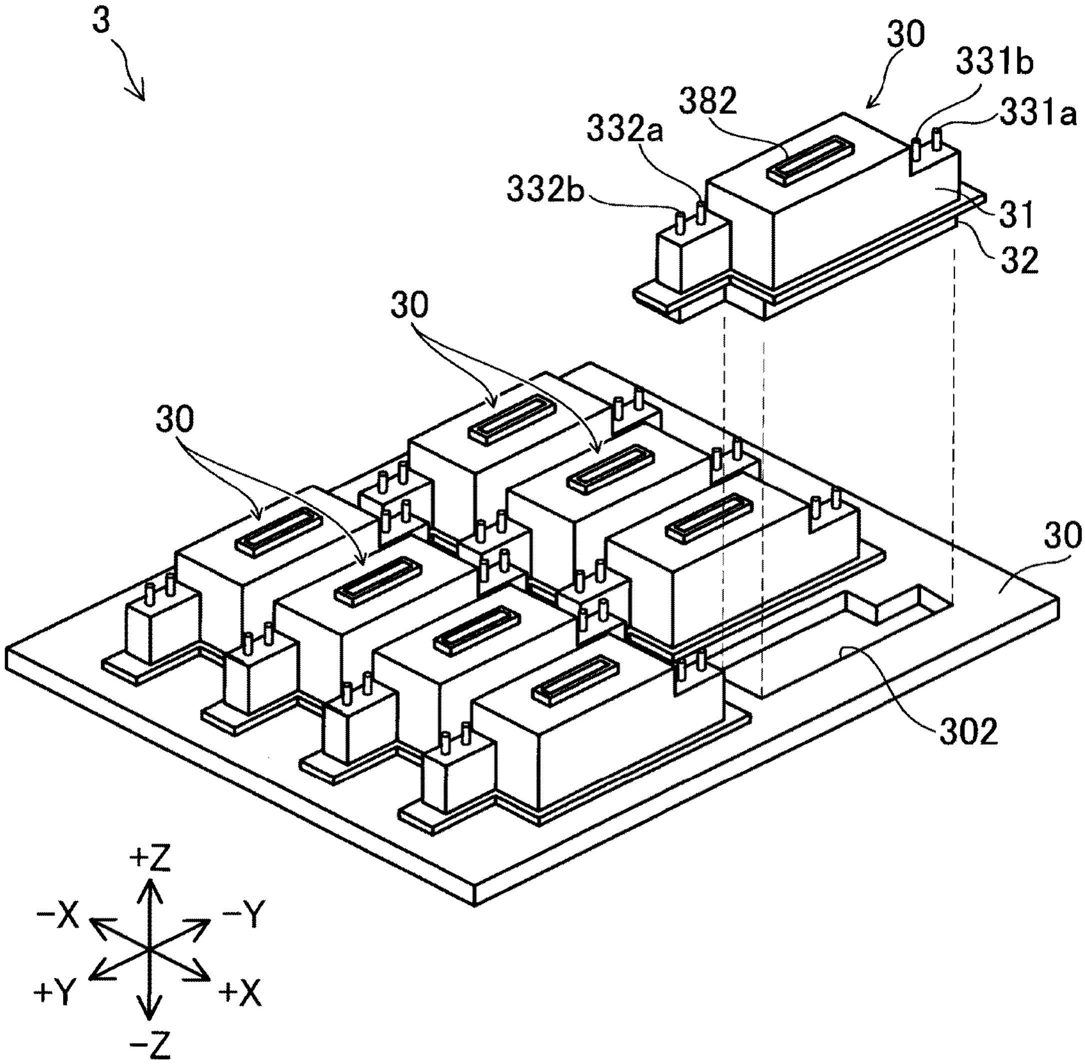

FIG. 3

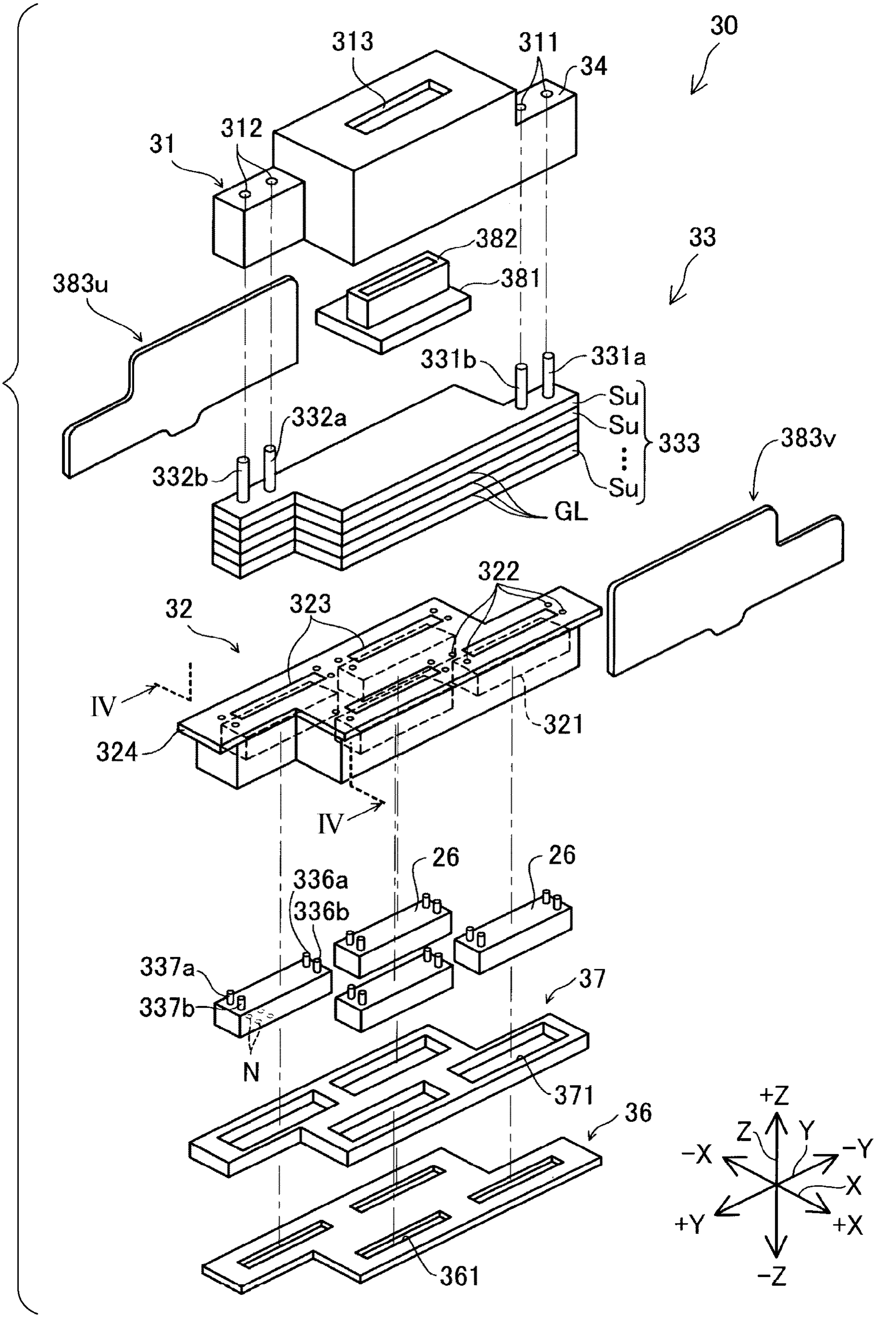
30
313
311
34
312
31
33
382
383u
381
331b
331a
Su
Su
332a
333
383v
332b
Su
GL
322
32
323
IV
321
324
IV
26
26
336a
336b
337a
337b
37
N
371
36
+Z
Z
Y
-X
-Y
X
+Y
+X
361
-Z

FIG. 4

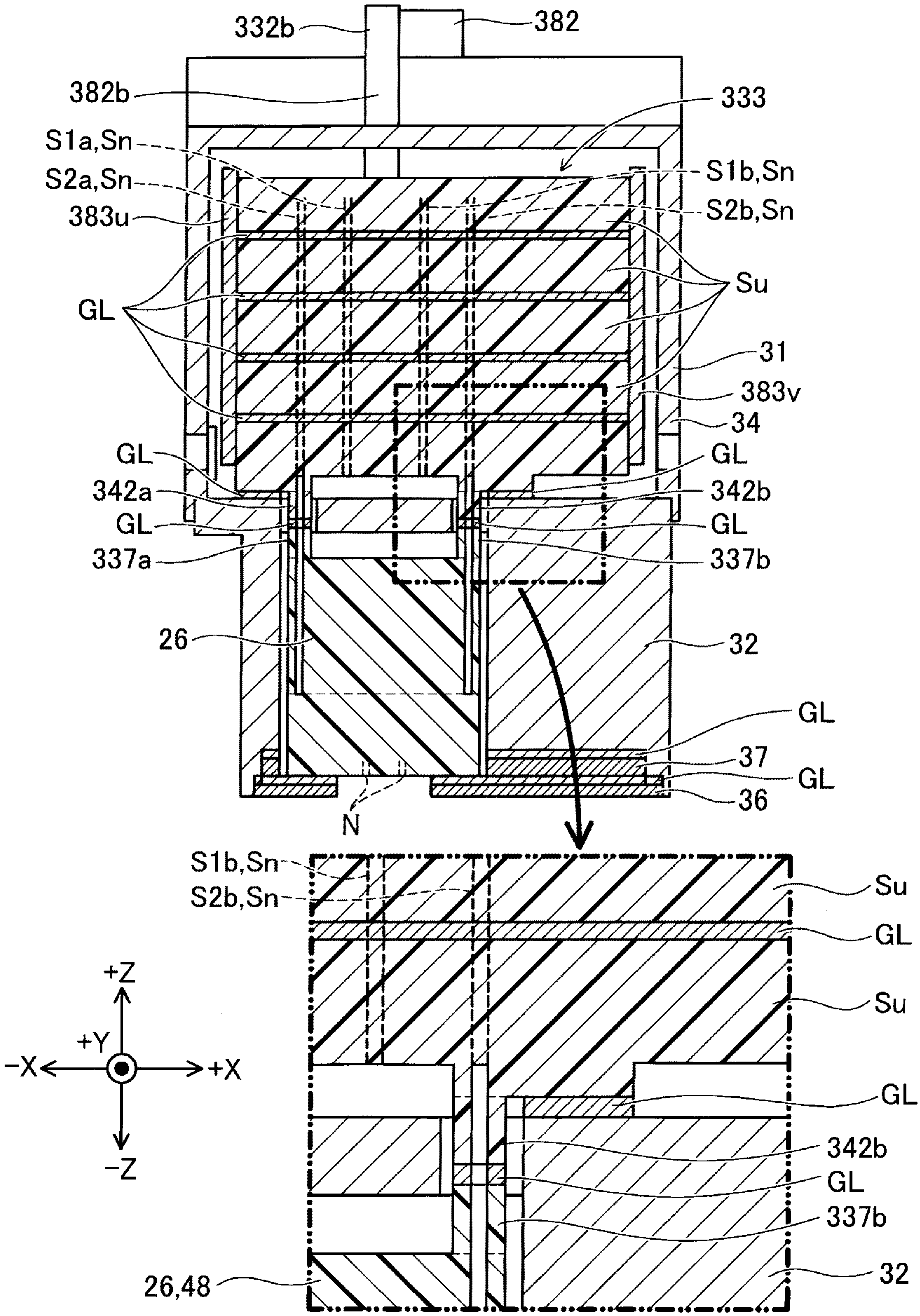
332b
382
382b
333
S1a,Sn
S1b,Sn
S2a,Sn
S2b,Sn
383u
GL
Su
31
383v
34
GL
GL
342a
342b
GL
GL
337a
337b
26
32
GL
37
GL
36
N
S1b,Sn
S2b,Sn
Su
GL
Su
GL
342b
GL
337b
26,48
32
+Z
+Y
-X
+X
-Z

FIG. 5

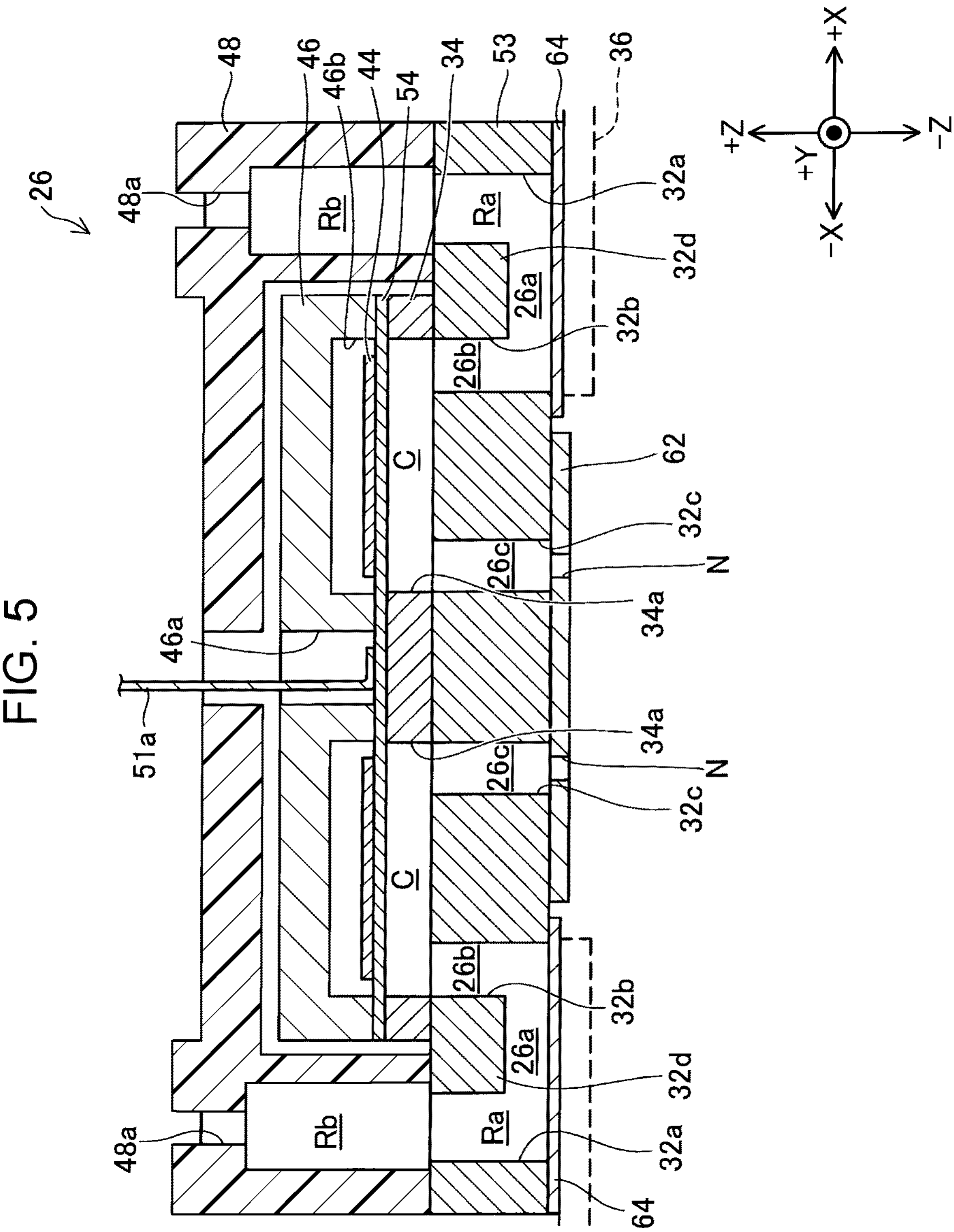
26
48
46
46b
44
54
34
53
64
36
48a
Rb
Ra
32a
32d
26a
32b
26b
C
62
32c
26c
N
34a
46a
51a
+X
-X
+Z
-Z
+Y

FIG. 6

| COMPONENT | CHEMICAL STRUCTURE | MOLECULAR WEIGHT | REACTIVE GROUP | NUMBER OF REACTIVE GROUPS | EQUIVALENT |
|---|---|---|---|---|---|
| CA-1 | CHEMICAL FORMULA (f1) | 360.4 | EPOXY GROUP | 4 | 90.1 |
| CA-2 | CHEMICAL FORMULA (f2) | 422.5 | EPOXY GROUP | 4 | 105.6 |
| CB-1 | BIS (AMINOMETHYL) NORBORNANE | 154.3 | AMINE ACTIVE HYDROGEN | 4 | 38.6 |
| CC-1 | CARVACROL | 150.2 | HYDROXYL GROUP | 1 | 150.2 |
| CC-2 | 4-ETHYLPHENOL | 122.17 | HYDROXYL GROUP | 1 | 122.2 |
| CC-3 | ORTHO-CYMEN-5-OL | 150.22 | HYDROXYL GROUP | 1 | 150.2 |
| CC-4 | THYMOL | 150.22 | HYDROXYL GROUP | 1 | 150.2 |
| CD-1 | CHEMICAL FORMULA (f3) | 135.2 | AMINE ACTIVE HYDROGEN | 2 | 67.6 |
| CE-1 | 3,4-DIHYDROCOUMARIN | 148.16 | ESTER GROUP | 1 | 148.2 |
| CF-1 | TYROSOL | 138.17 | HYDROXYL GROUP | 1 | 138.17 |
| CG-1 | POLYOXYPROPYLENEDIAMINE | 240.0 | AMINE ACTIVE HYDROGEN | 4 | 60 |
| CG-2 | 4,4'-DIAMINO-3,3'-DIETHYL-5,5'-DIMETHYLDIPHENYLMETHANE | 282.43 | AMINE ACTIVE HYDROGEN | 4 | 70.6 |

# FIG. 7

| | |
|---|---|
| (f1) | 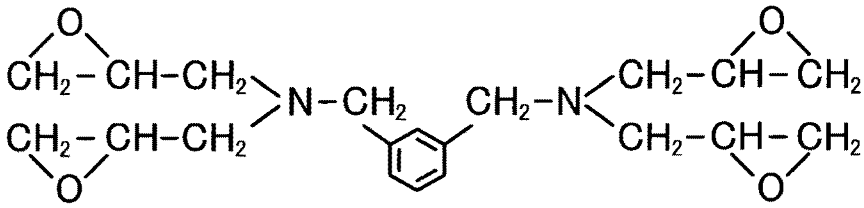 |
| (f2) | 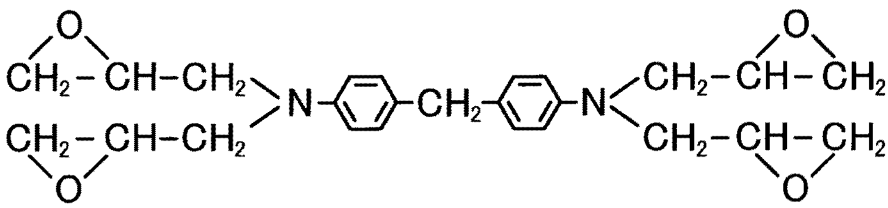 |
| (f3) | 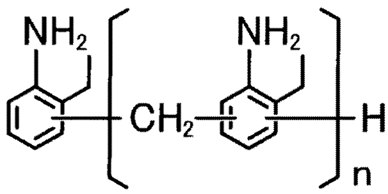 |

FIG. 8

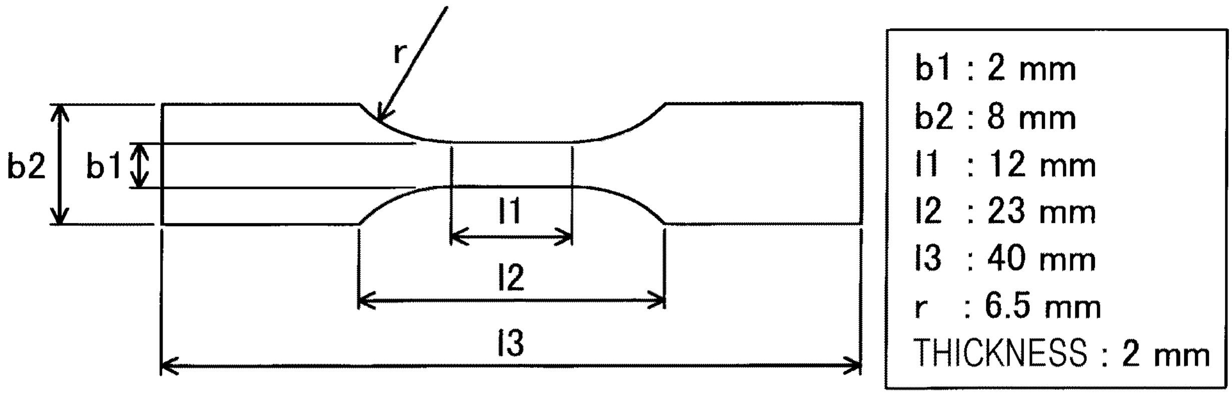
r
b2
b1
l1
l2
l3
b1 : 2 mm
b2 : 8 mm
l1 : 12 mm
l2 : 23 mm
l3 : 40 mm
r : 6.5 mm
THICKNESS : 2 mm

FIG. 9

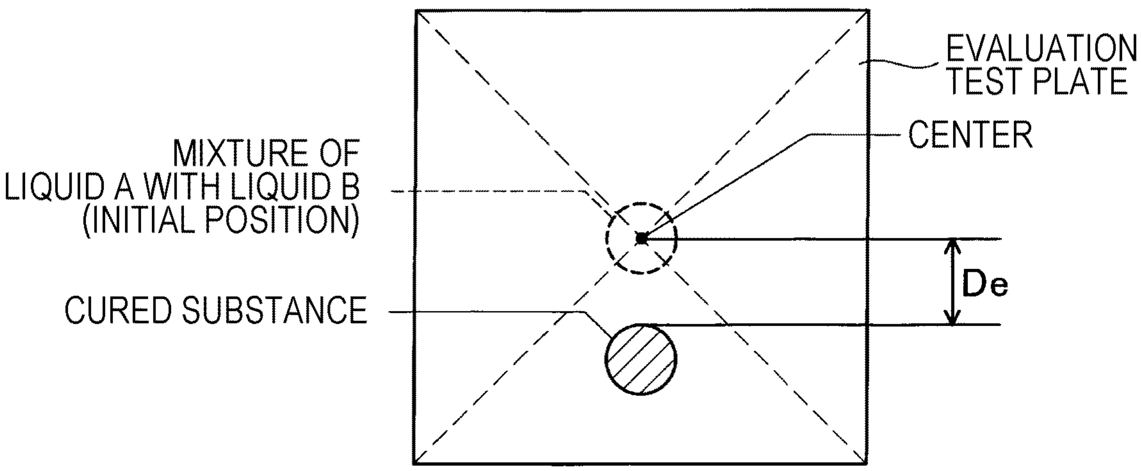
EVALUATION TEST PLATE
CENTER
MIXTURE OF LIQUID A WITH LIQUID B (INITIAL POSITION)
CURED SUBSTANCE
De

# FIG. 10

(TEST 1)

| EQUIVALENT RATIO | | TEST EXAMPLE | | | | | | |
|---|---|---|---|---|---|---|---|---|
| | | 1 | 2 | 3 | 4 | 5 | 6 | 7 |
| LIQUID A | COMPONENT CA-1 | 1.0 | 2.0 | 3.0 | 4.0 | 5.0 | 7.0 | 9.0 |
| | COMPONENT CD-1 | 0.6 | 1.6 | 2.6 | 3.6 | 4.6 | 6.6 | 8.6 |
| | COMPONENT CE-1 | 0.1 | 0.1 | 0.1 | 0.1 | 0.1 | 0.1 | 0.1 |
| LIQUID B | COMPONENT CA-1 | 0.1 | 0.1 | 0.1 | 0.1 | 0.1 | 0.1 | 0.1 |
| | COMPONENT CB-1 | 1.0 | 1.0 | 1.0 | 1.0 | 1.0 | 1.0 | 1.0 |
| | COMPONENT CC-1 | 0.5 | 0.5 | 0.5 | 0.5 | 0.5 | 0.5 | 0.5 |
| RATIO (CB-1/AMINE) | | 0.63 | 0.38 | 0.28 | 0.22 | 0.18 | 0.13 | 0.10 |

| MASS RATIO | | TEST EXAMPLE | | | | | | |
|---|---|---|---|---|---|---|---|---|
| | | 1 | 2 | 3 | 4 | 5 | 6 | 7 |
| LIQUID A | COMPONENT CA-1 | 33.6 | 42.3 | 46.3 | 48.6 | 50.1 | 51.9 | 53.0 |
| | COMPONENT CD-1 | 15.1 | 25.4 | 30.1 | 32.8 | 34.6 | 36.7 | 38.0 |
| | COMPONENT CE-1 | 5.5 | 3.5 | 2.5 | 2.0 | 1.6 | 1.2 | 1.0 |
| LIQUID B | COMPONENT CA-1 | 3.4 | 2.1 | 1.5 | 1.2 | 1.0 | 0.7 | 0.6 |
| | COMPONENT CB-1 | 14.4 | 9.1 | 6.6 | 5.2 | 4.3 | 3.2 | 2.5 |
| | COMPONENT CC-1 | 28.0 | 17.6 | 12.9 | 10.1 | 8.4 | 6.2 | 4.9 |

FIG. 11

| (TEST 1) | TEST EXAMPLE | | | | | | |
|---|---|---|---|---|---|---|---|
| | 1 | 2 | 3 | 4 | 5 | 6 | 7 |
| EVALUATION A-1 | B | B | B | A | A | A | A |
| EVALUATION A-2 | B | B | B | A | A | A | A |
| EVALUATION A-3 | B | B | B | A | A | A | A |
| EVALUATION B | A | A | A | A | A | A | B |

| (TEST 2) | TEST EXAMPLE | | | | | | |
|---|---|---|---|---|---|---|---|
| | 8 | 9 | 10 | 11 | 12 | 13 | 14 |
| EVALUATION A-1 | B | B | B | A | A | A | A |
| EVALUATION A-2 | B | B | B | A | A | A | A |
| EVALUATION A-3 | C | C | C | B | B | B | B |
| EVALUATION B | B | B | B | B | B | B | B |

| (TEST 3) | TEST EXAMPLE | | | | | | | | TEST EXAMPLE | |
|---|---|---|---|---|---|---|---|---|---|---|
| | 15 | 16 | 17 | 18 | 19 | 20 | 21 | 22 | 23 | 24 |
| EVALUATION A-1 | A | A | A | A | A | A | A | A | A | A |
| EVALUATION A-2 | A | A | A | A | A | A | A | A | A | A |
| EVALUATION A-3 | A | A | A | A | A | A | A | A | A | A |
| EVALUATION B | A | A | A | A | A | A | A | A | A | A |

# FIG. 12

(TEST 2)

| EQUIVALENT RATIO | | TEST EXAMPLE 8 | 9 | 10 | 11 | 12 | 13 | 14 |
|---|---|---|---|---|---|---|---|---|
| LIQUID A | COMPONENT CA-1 | 1.0 | 2.0 | 3.0 | 4.0 | 5.0 | 7.0 | 9.0 |
| | COMPONENT CD-1 | 0.6 | 1.6 | 2.6 | 3.6 | 4.6 | 6.6 | 8.6 |
| LIQUID B | COMPONENT CA-1 | 0.1 | 0.1 | 0.1 | 0.1 | 0.1 | 0.1 | 0.1 |
| | COMPONENT CB-1 | 1.0 | 1.0 | 1.0 | 1.0 | 1.0 | 1.0 | 1.0 |
| | COMPONENT CC-1 | 0.5 | 0.5 | 0.5 | 0.5 | 0.5 | 0.5 | 0.5 |
| RATIO (CB-1/AMINE) | | 0.63 | 0.38 | 0.28 | 0.22 | 0.18 | 0.13 | 0.10 |

| MASS RATIO | | TEST EXAMPLE 8 | 9 | 10 | 11 | 12 | 13 | 14 |
|---|---|---|---|---|---|---|---|---|
| LIQUID A | COMPONENT CA-1 | 35.6 | 43.8 | 47.5 | 49.6 | 51.0 | 52.6 | 53.5 |
| | COMPONENT CD-1 | 16.0 | 26.3 | 30.9 | 33.5 | 35.2 | 37.2 | 38.4 |
| LIQUID B | COMPONENT CA-1 | 3.6 | 2.2 | 1.6 | 1.2 | 1.0 | 0.8 | 0.6 |
| | COMPONENT CB-1 | 15.2 | 9.4 | 6.8 | 5.3 | 4.4 | 3.2 | 2.5 |
| | COMPONENT CC-1 | 29.6 | 18.3 | 13.2 | 10.3 | 8.5 | 6.3 | 5.0 |

# FIG. 13

(TEST 3)

| EQUIVALENT RATIO | | TEST EXAMPLE | | | | | | | | TEST EXAMPLE | |
|---|---|---|---|---|---|---|---|---|---|---|---|
| | | 15 | 16 | 17 | 18 | 19 | 20 | 21 | 22 | 23 | 24 |
| LIQUID A | COMPONENT CA-1 | 5.0 | 5.0 | 5.0 | 5.0 | 5.0 | 5.0 | 5.0 | 5.0 | 5.0 | 5.0 |
| | COMPONENT CD-1 | 4.6 | 4.6 | 4.6 | 4.6 | 4.6 | 4.6 | 4.6 | 4.6 | 4.6 | 4.6 |
| | COMPONENT CE-1 | 0.1 | 0.1 | 0.1 | 0.1 | 0.1 | 0.1 | 0.1 | 0.1 | 0.1 | 0.1 |
| LIQUID B | COMPONENT CA-1 | 0.05 | 0.05 | 0.07 | 0.07 | 0.14 | 0.14 | 0.17 | 0.17 | 0.14 | 0.14 |
| | COMPONENT CB-1 | 1.0 | 1.0 | 1.00 | 1.0 | 1.0 | 1.0 | 1.0 | 1.0 | 1.0 | 1.0 |
| | COMPONENT CC-1 | 0.35 | 0.70 | 0.35 | 0.70 | 0.35 | 0.70 | 0.35 | 0.70 | 0.10 | 0.95 |

| MASS RATIO | | TEST EXAMPLE | | | | | | | | TEST EXAMPLE | |
|---|---|---|---|---|---|---|---|---|---|---|---|
| | | 15 | 16 | 17 | 18 | 19 | 20 | 21 | 22 | 23 | 24 |
| LIQUID A | COMPONENT CA-1 | 51.7 | 48.7 | 51.6 | 48.6 | 51.2 | 48.3 | 51.0 | 48.2 | 53.5 | 46.4 |
| | COMPONENT CD-1 | 35.7 | 33.6 | 35.6 | 33.6 | 35.3 | 33.3 | 35.2 | 33.2 | 36.9 | 32.1 |
| | COMPONENT CE-1 | 1.7 | 1.6 | 1.7 | 1.6 | 1.7 | 1.6 | 1.7 | 1.6 | 1.8 | 1.5 |
| LIQUID B | COMPONENT CA-1 | 0.5 | 0.5 | 0.7 | 0.7 | 1.4 | 1.4 | 1.7 | 1.6 | 1.5 | 1.3 |
| | COMPONENT CB-1 | 4.4 | 4.2 | 4.4 | 4.2 | 4.4 | 4.1 | 4.4 | 4.1 | 4.6 | 4.0 |
| | COMPONENT CC-1 | 6.0 | 11.4 | 6.0 | 11.4 | 6.0 | 11.3 | 6.0 | 11.2 | 1.8 | 14.7 |

# FIG. 14

(TEST 4)

| EQUIVALENT RATIO | | TEST EXAMPLE 25 | TEST EXAMPLE 26 |
|---|---|---|---|
| LIQUID A | COMPONENT CA-1 | 5.0 | 5.0 |
| | COMPONENT CD-1 | 4.6 | 4.6 |
| | COMPONENT CE-1 | 0.1 | 0.1 |
| LIQUID B | COMPONENT CA-1 | 0.33 | 0.33 |
| | COMPONENT CB-1 | 1.00 | 1.00 |
| | COMPONENT CC-1 | 0.35 | 0.70 |

| EQUIVALENT RATIO | | TEST EXAMPLE 27 | TEST EXAMPLE 28 |
|---|---|---|---|
| LIQUID A | COMPONENT CA-1 | 5.0 | 5.0 |
| | COMPONENT CD-1 | 4.6 | 4.6 |
| | COMPONENT CE-1 | 0.1 | 0.1 |
| LIQUID B | COMPONENT CA-1 | 0.10 | 0.00 |
| | COMPONENT CF-1 | 0.23 | 0.33 |
| | COMPONENT CB-1 | 1.00 | 1.00 |
| | COMPONENT CC-1 | 0.50 | 0.50 |

| MASS RATIO | | TEST EXAMPLE 25 | TEST EXAMPLE 26 |
|---|---|---|---|
| LIQUID A | COMPONENT CA-1 | 50.2 | 47.4 |
| | COMPONENT CD-1 | 34.7 | 32.7 |
| | COMPONENT CE-1 | 1.7 | 1.6 |
| LIQUID B | COMPONENT CA-1 | 3.3 | 3.1 |
| | COMPONENT CB-1 | 4.3 | 4.1 |
| | COMPONENT CC-1 | 5.9 | 11.4 |

| MASS RATIO | | TEST EXAMPLE 27 | TEST EXAMPLE 28 |
|---|---|---|---|
| LIQUID A | COMPONENT CA-1 | 48.4 | 48.1 |
| | COMPONENT CD-1 | 33.4 | 33.2 |
| | COMPONENT CE-1 | 1.6 | 1.6 |
| LIQUID B | COMPONENT CA-1 | 1.0 | 0.0 |
| | COMPONENT CF-1 | 3.4 | 4.9 |
| | COMPONENT CB-1 | 4.1 | 4.1 |
| | COMPONENT CC-1 | 8.1 | 8.0 |

# FIG. 15

| (TEST 4) | TEST EXAMPLE | | | |
|---|---|---|---|---|
| | 25 | 26 | 27 | 28 |
| EVALUATION A-1 | - | - | A | A |
| EVALUATION A-2 | - | - | A | A |
| EVALUATION A-3 | - | - | A | A |
| EVALUATION B | - | - | A | A |

| (TEST 5) | TEST EXAMPLE | | | |
|---|---|---|---|---|
| | 29 | 30 | 31 | 32 |
| EVALUATION A-1 | A | A | A | C |
| EVALUATION A-2 | A | A | A | C |
| EVALUATION A-3 | A | A | A | D |
| EVALUATION B | A | A | A | C |

| (TEST 6) | TEST EXAMPLE | | | |
|---|---|---|---|---|
| | 33 | 34 | 35 | 36 |
| EVALUATION A-1 | A | A | A | A |
| EVALUATION A-2 | A | A | A | A |
| EVALUATION A-3 | A | A | A | A |
| EVALUATION B | A | A | A | A |

| (TEST 7) | TEST EXAMPLE | | | | |
|---|---|---|---|---|---|
| | 37 | 38 | 39 | 40 | 41 |
| EVALUATION A-1 | A | C | C | C | C |
| EVALUATION A-2 | A | C | C | C | C |
| EVALUATION A-3 | A | D | D | D | D |
| EVALUATION B | A | C | C | C | C |

# FIG. 16

(TEST 5)

| EQUIVALENT RATIO | | TEST EXAMPLE 29 | 30 | 31 | 32 |
|---|---|---|---|---|---|
| LIQUID A | COMPONENT CA-1 | 5.0 | 5.0 | 5.0 | 5.0 |
| | COMPONENT CD-1 | 4.6 | 4.6 | 4.6 | 4.6 |
| | COMPONENT CE-1 | 0.1 | 0.1 | 0.1 | 0.1 |
| LIQUID B | COMPONENT CA-1 | 0.10 | 0.10 | 0.10 | 0.10 |
| | COMPONENT CB-1 | 1.00 | 1.00 | 1.00 | 1.00 |
| | COMPONENT CC-2 | 0.50 | 0.00 | 0.00 | 0.00 |
| | COMPONENT CC-3 | 0.00 | 0.50 | 0.00 | 0.00 |
| | COMPONENT CC-4 | 0.00 | 0.00 | 0.50 | 0.00 |

| MASS RATIO | | TEST EXAMPLE 29 | 30 | 31 | 32 |
|---|---|---|---|---|---|
| LIQUID A | COMPONENT CA-1 | 50.9 | 50.1 | 50.1 | 54.7 |
| | COMPONENT CD-1 | 35.1 | 34.6 | 34.6 | 37.7 |
| | COMPONENT CE-1 | 1.7 | 1.6 | 1.6 | 1.8 |
| LIQUID B | COMPONENT CA-1 | 1.0 | 1.0 | 1.0 | 1.1 |
| | COMPONENT CB-1 | 4.4 | 4.3 | 4.3 | 4.7 |
| | COMPONENT CC-2 | 6.90 | 0.00 | 0.00 | 0.00 |
| | COMPONENT CC-3 | 0.00 | 8.35 | 0.00 | 0.00 |
| | COMPONENT CC-4 | 0.00 | 0.00 | 8.35 | 0.00 |

# FIG. 17

(TEST 6)

| EQUIVALENT RATIO | | TEST EXAMPLE 33 | TEST EXAMPLE 34 | TEST EXAMPLE 35 | TEST EXAMPLE 36 |
|---|---|---|---|---|---|
| LIQUID A | COMPONENT CA-1 | 5.0 | 5.0 | 5.0 | 5.0 |
| | COMPONENT CE-1 | 0.1 | 0.1 | 0.1 | 0.1 |
| LIQUID B | COMPONENT CA-1 | 0.07 | 0.14 | 0.10 | 0.00 |
| | COMPONENT CF-1 | 0.00 | 0.00 | 0.23 | 0.33 |
| | COMPONENT CB-2 | 1.00 | 1.00 | 1.00 | 1.00 |
| | COMPONENT CC-1 | 0.70 | 0.35 | 0.50 | 0.50 |
| | COMPONENT CD-1 | 4.6 | 4.6 | 4.6 | 4.6 |

| MASS RATIO | | TEST EXAMPLE 33 | TEST EXAMPLE 34 | TEST EXAMPLE 35 | TEST EXAMPLE 36 |
|---|---|---|---|---|---|
| LIQUID A | COMPONENT CA-1 | 48.6 | 51.2 | 48.4 | 48.13 |
| | COMPONENT CE-1 | 1.6 | 1.7 | 1.6 | 1.6 |
| LIQUID B | COMPONENT CA-1 | 0.7 | 1.4 | 1.0 | 0.0 |
| | COMPONENT CF-1 | 0.0 | 0.0 | 3.4 | 4.9 |
| | COMPONENT CB-2 | 4.2 | 4.4 | 4.1 | 4.1 |
| | COMPONENT CC-1 | 11.4 | 6.0 | 8.1 | 8.0 |
| | COMPONENT CD-1 | 33.6 | 35.3 | 33.4 | 33.2 |

# FIG. 18

(TEST 7)

| EQUIVALENT RATIO | | TEST EXAMPLE 37 |
|---|---|---|
| LIQUID A | COMPONENT CA-1 | 5.0 |
| | COMPONENT CE-1 | 0.1 |
| LIQUID B | COMPONENT CA-1 | 0.1 |
| | COMPONENT CB-1 | 1.0 |
| | COMPONENT CC-1 | 0.5 |
| | COMPONENT CD-1 | 4.6 |

| EQUIVALENT RATIO | | TEST EXAMPLE 38 | TEST EXAMPLE 39 |
|---|---|---|---|
| LIQUID A | COMPONENT CA-1 | 5.0 | 5.0 |
| LIQUID B | COMPONENT CA-1 | 0.1 | 0.1 |
| | COMPONENT CG-1 | 4.6 | 0.0 |
| | COMPONENT CG-2 | 0.0 | 4.6 |

| EQUIVALENT RATIO | | TEST EXAMPLE 40 | TEST EXAMPLE 41 |
|---|---|---|---|
| LIQUID A | COMPONENT CA-1 | 5.0 | 5.0 |
| | COMPONENT CG-1 | 4.6 | 0.0 |
| | COMPONENT CG-2 | 0.0 | 4.6 |
| LIQUID B | COMPONENT CA-1 | 0.1 | 0.1 |

| MASS RATIO | | TEST EXAMPLE 37 |
|---|---|---|
| LIQUID A | COMPONENT CA-1 | 50.1 |
| | COMPONENT CE-1 | 1.6 |
| LIQUID B | COMPONENT CA-1 | 1.0 |
| | COMPONENT CB-1 | 4.3 |
| | COMPONENT CC-1 | 8.4 |
| | COMPONENT CD-1 | 34.6 |

| MASS RATIO | | TEST EXAMPLE 38 | TEST EXAMPLE 39 |
|---|---|---|---|
| LIQUID A | COMPONENT CA-1 | 61.3 | 57.4 |
| LIQUID B | COMPONENT CA-1 | 1.2 | 1.1 |
| | COMPONENT CG-1 | 37.5 | 0.0 |
| | COMPONENT CG-2 | 0.0 | 41.4 |

| MASS RATIO | | TEST EXAMPLE 40 | TEST EXAMPLE 41 |
|---|---|---|---|
| LIQUID A | COMPONENT CA-1 | 61.3 | 57.45 |
| | COMPONENT CG-1 | 37.5 | 0.0 |
| | COMPONENT CG-2 | 0.0 | 41.4 |
| LIQUID B | COMPONENT CA-1 | 1.2 | 1.1 |

# FIG. 19

(TEST 8)

| EQUIVALENT RATIO | | TEST EXAMPLE 42 | 43 | 44 | 45 |
|---|---|---|---|---|---|
| LIQUID A | COMPONENT CA-2 | 5.0 | 5.0 | 5.0 | 5.0 |
| | COMPONENT CE-1 | 0.1 | 0.1 | 0.1 | 0.1 |
| LIQUID B | COMPONENT CA-1 | 0.07 | 0.14 | 0.10 | 0.00 |
| | COMPONENT CF-1 | 0.00 | 0.00 | 0.23 | 0.33 |
| | COMPONENT CB-1 | 1.00 | 1.00 | 1.00 | 1.00 |
| | COMPONENT CC-1 | 0.70 | 0.35 | 0.50 | 0.50 |
| | COMPONENT CD-1 | 4.6 | 4.6 | 4.6 | 4.6 |

| MASS RATIO | | TEST EXAMPLE 42 | 43 | 44 | 45 |
|---|---|---|---|---|---|
| LIQUID A | COMPONENT CA-2 | 52.6 | 55.1 | 52.4 | 52.1 |
| | COMPONENT CE-1 | 1.5 | 1.5 | 1.5 | 1.5 |
| LIQUID B | COMPONENT CA-1 | 0.6 | 1.3 | 0.9 | 0.0 |
| | COMPONENT CF-1 | 0.0 | 0.0 | 3.2 | 4.5 |
| | COMPONENT CB-1 | 3.8 | 4.0 | 3.8 | 3.8 |
| | COMPONENT CC-1 | 10.5 | 5.5 | 7.4 | 7.4 |
| | COMPONENT CD-1 | 31.0 | 32.5 | 30.8 | 30.7 |

FIG. 20

| (TEST 8) | TEST EXAMPLE 42 | 43 | 44 | 45 |
|---|---|---|---|---|
| EVALUATION A-1 | A | A | A | A |
| EVALUATION A-2 | A | A | A | A |
| EVALUATION A-3 | A | A | A | A |
| EVALUATION B | A | A | A | A |

| (TEST 9) | TEST EXAMPLE 46 | 47 | 48 | 49 |
|---|---|---|---|---|
| EVALUATION A-1 | A | A | A | A |
| EVALUATION A-2 | A | A | A | A |
| EVALUATION A-3 | A | A | A | A |
| EVALUATION B | A | A | A | A |

| (TEST 10) | TEST EXAMPLE 50 | 51 | 52 | 53 |
|---|---|---|---|---|
| EVALUATION A-1 | A | A | A | A |
| EVALUATION A-2 | A | A | A | A |
| EVALUATION A-3 | A | A | A | A |
| EVALUATION B | A | A | A | A |

| (TEST 11) | TEST EXAMPLE 54 | 55 |
|---|---|---|
| EVALUATION A-1 | A | A |
| EVALUATION A-2 | A | A |
| EVALUATION A-3 | A | B |
| EVALUATION B | A | B |

# FIG. 21

(TEST 9)

| EQUIVALENT RATIO | | TEST EXAMPLE 46 | 47 | 48 | 49 |
|---|---|---|---|---|---|
| LIQUID A | COMPONENT CA-1 | 5.0 | 5.0 | 5.0 | 5.0 |
| | COMPONENT CE-1 | 0.1 | 0.1 | 0.1 | 0.1 |
| LIQUID B | COMPONENT CA-2 | 0.07 | 0.14 | 0.10 | 0.00 |
| | COMPONENT CF-1 | 0.00 | 0.00 | 0.23 | 0.33 |
| | COMPONENT CB-1 | 1.00 | 1.00 | 1.00 | 1.00 |
| | COMPONENT CC-1 | 0.70 | 0.35 | 0.50 | 0.50 |
| | COMPONENT CD-1 | 4.6 | 4.6 | 4.6 | 4.6 |

| MASS RATIO | | TEST EXAMPLE 46 | 47 | 48 | 49 |
|---|---|---|---|---|---|
| LIQUID A | COMPONENT CA-1 | 48.6 | 51.1 | 48.3 | 48.13 |
| | COMPONENT CE-1 | 1.6 | 1.7 | 1.6 | 1.6 |
| LIQUID B | COMPONENT CA-2 | 0.8 | 1.7 | 1.1 | 0.0 |
| | COMPONENT CF-1 | 0.0 | 0.0 | 3.4 | 4.9 |
| | COMPONENT CB-1 | 4.2 | 4.4 | 4.1 | 4.1 |
| | COMPONENT CC-1 | 11.3 | 6.0 | 8.1 | 8.0 |
| | COMPONENT CD-1 | 33.5 | 35.2 | 33.4 | 33.2 |

# FIG. 22

(TEST 10)

| EQUIVALENT RATIO | | TEST EXAMPLE 50 | 51 | 52 | 53 |
|---|---|---|---|---|---|
| LIQUID A | COMPONENT CA-2 | 5.0 | 5.0 | 5.0 | 5.0 |
| | COMPONENT CE-1 | 0.1 | 0.1 | 0.1 | 0.1 |
| LIQUID B | COMPONENT CA-2 | 0.07 | 0.14 | 0.10 | 0.00 |
| | COMPONENT CF-1 | 0.00 | 0.00 | 0.23 | 0.33 |
| | COMPONENT CB-1 | 1.00 | 1.00 | 1.00 | 1.00 |
| | COMPONENT CC-1 | 0.70 | 0.35 | 0.50 | 0.50 |
| | COMPONENT CD-1 | 4.6 | 4.6 | 4.6 | 4.6 |

| MASS RATIO | | TEST EXAMPLE 50 | 51 | 52 | 53 |
|---|---|---|---|---|---|
| LIQUID A | COMPONENT CA-2 | 52.5 | 55.0 | 52.3 | 52.10 |
| | COMPONENT CE-1 | 1.5 | 1.5 | 1.5 | 1.5 |
| LIQUID B | COMPONENT CA-2 | 0.7 | 1.5 | 1.0 | 0.0 |
| | COMPONENT CF-1 | 0.0 | 0.0 | 3.1 | 4.5 |
| | COMPONENT CB-1 | 3.8 | 4.0 | 3.8 | 3.8 |
| | COMPONENT CC-1 | 10.5 | 5.5 | 7.4 | 7.4 |
| | COMPONENT CD-1 | 30.9 | 32.4 | 30.8 | 30.7 |

# FIG. 23

(TEST 11)

| EQUIVALENT RATIO | | TEST EXAMPLE 54 | TEST EXAMPLE 55 |
|---|---|---|---|
| LIQUID A | COMPONENT CA-2 | 5.0 | 5.0 |
| | COMPONENT CD-1 | 4.6 | 4.6 |
| | COMPONENT CE-1 | 0.1 | 0.0 |
| LIQUID B | COMPONENT CA-2 | 0.1 | 0.1 |
| | COMPONENT CB-1 | 1.0 | 1.0 |
| | COMPONENT CC-1 | 0.5 | 0.5 |
| RATIO (CB-1/AMINE) | | 0.18 | 0.18 |

| MASS RATIO | | TEST EXAMPLE 54 | TEST EXAMPLE 55 |
|---|---|---|---|
| LIQUID A | COMPONENT CA-2 | 54.0 | 54.8 |
| | COMPONENT CD-1 | 31.8 | 32.3 |
| | COMPONENT CE-1 | 1.5 | 0.0 |
| LIQUID B | COMPONENT CA-2 | 1.1 | 1.1 |
| | COMPONENT CB-1 | 3.9 | 4.0 |
| | COMPONENT CC-1 | 7.7 | 7.8 |

FIG. 24

(TEST 12)

| EQUIVALENT RATIO | | TEST EXAMPLE 56 | 57 | 58 | 59 |
|---|---|---|---|---|---|
| LIQUID A | COMPONENT CA-1 | 5.0 | 0.0 | 4.0 | 1.0 |
| | COMPONENT CA-2 | 0.0 | 5.0 | 1.0 | 4.0 |
| | COMPONENT CE-1 | 0.5 | 0.5 | 0.5 | 0.5 |
| LIQUID B | COMPONENT CA-1 | 0.10 | 0.00 | 0.08 | 0.02 |
| | COMPONENT CA-2 | 0.00 | 0.10 | 0.02 | 0.08 |
| | COMPONENT CF-1 | 0.23 | 0.23 | 0.23 | 0.23 |
| | COMPONENT CB-1 | 1.00 | 1.00 | 1.00 | 1.00 |
| | COMPONENT CC-1 | 0.50 | 0.50 | 0.50 | 0.50 |
| | COMPONENT CD-1 | 4.6 | 4.6 | 4.6 | 4.6 |

| MASS RATIO | | TEST EXAMPLE 56 | 57 | 58 | 59 |
|---|---|---|---|---|---|
| LIQUID A | COMPONENT CA-1 | 45.5 | 0.0 | 35.8 | 8.6 |
| | COMPONENT CA-2 | 0.0 | 49.4 | 10.5 | 40.1 |
| | COMPONENT CE-1 | 7.5 | 6.9 | 7.4 | 7.0 |
| LIQUID B | COMPONENT CA-1 | 0.9 | 0.0 | 0.7 | 0.2 |
| | COMPONENT CA-2 | 0.0 | 1.0 | 0.2 | 0.8 |
| | COMPONENT CF-1 | 3.2 | 3.0 | 3.2 | 3.0 |
| | COMPONENT CB-1 | 3.9 | 3.6 | 3.8 | 3.7 |
| | COMPONENT CC-1 | 7.6 | 7.0 | 7.5 | 7.1 |
| | COMPONENT CD-1 | 31.4 | 29.1 | 30.9 | 29.5 |

FIG. 25

| (TEST 12) | TEST EXAMPLE | | | |
|---|---|---|---|---|
| | 56 | 57 | 58 | 59 |
| EVALUATION A-1 | A | A | A | A |
| EVALUATION A-2 | A | A | A | A |
| EVALUATION A-3 | A | A | A | A |
| EVALUATION B | A | A | A | A |

| (TEST 13) | TEST EXAMPLE | | | |
|---|---|---|---|---|
| | 60 | 61 | 62 | 63 |
| EVALUATION A-1 | A | A | A | A |
| EVALUATION A-2 | A | A | A | A |
| EVALUATION A-3 | A | B | A | B |
| EVALUATION B | A | B | A | B |

# FIG. 26

(TEST 13)

| EQUIVALENT RATIO | | TEST EXAMPLE 60 | 61 | 62 | 63 |
|---|---|---|---|---|---|
| LIQUID A | COMPONENT CA-1 | 2.5 | 2.5 | 2.5 | 2.5 |
| | COMPONENT CA-2 | 2.5 | 2.5 | 2.5 | 2.5 |
| | COMPONENT CE-1 | 0.5 | 0.0 | 0.5 | 0.0 |
| | COMPONENT CD-1 | 4.5 | 4.5 | 0.0 | 0.0 |
| LIQUID B | COMPONENT CB-1 | 1.00 | 1.00 | 1.00 | 1.00 |
| | COMPONENT CC-1 | 0.50 | 0.50 | 0.50 | 0.50 |
| | COMPONENT CD-1 | 0.0 | 0.0 | 4.5 | 4.5 |
| RATIO (CB-1/AMINE) | | 0.18 | 0.18 | 0.18 | 0.18 |

| MASS RATIO | | TEST EXAMPLE 60 | 61 | 62 | 63 |
|---|---|---|---|---|---|
| LIQUID A | COMPONENT CA-1 | 23.0 | 24.8 | 23.0 | 24.8 |
| | COMPONENT CA-2 | 26.9 | 29.1 | 26.9 | 29.1 |
| | COMPONENT CE-1 | 7.5 | 0.0 | 7.5 | 0.0 |
| | COMPONENT CD-1 | 31.0 | 33.5 | 0.0 | 0.0 |
| LIQUID B | COMPONENT CB-1 | 3.9 | 4.3 | 3.9 | 4.3 |
| | COMPONENT CC-1 | 7.7 | 8.3 | 7.7 | 8.3 |
| | COMPONENT CD-1 | 0.0 | 0.0 | 31.0 | 33.5 |

Europäisches Patentamt
European Patent Office
Office européen des brevets

# EUROPEAN SEARCH REPORT

Application Number
EP 25 20 6314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2002 155129 A (RICOH KK) 28 May 2002 (2002-05-28) * paragraphs [0032], [0033], [0084]; figures 1-3 * | 1-14 | INV. B41J2/16 C08G59/62 C08K5/17 C08L63/00 B41J2/14 C09J163/00 |
| A | US 2009/309915 A1 (NOGUCHI MITSUTOSHI [JP]) 17 December 2009 (2009-12-17) * the whole document * | 1-14 | |
| A | JP 2014 097667 A (KONICA MINOLTA INC) 29 May 2014 (2014-05-29) * the whole document * | 1-14 | |
| X | US 2003/159773 A1 (TOMIYAMA TAKEO [JP] ET AL) 28 August 2003 (2003-08-28) * paragraph [0074] * | 15 | |

TECHNICAL FIELDS SEARCHED (IPC)
B41J
C08G
C08K
C08L
C09J

The present search report has been drawn up for all claims

1

| Place of search | Date of completion of the search | Examiner |
|---|---|---|
| The Hague | 29 January 2026 | Öztürk, Serkan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 20 6314

This annex lists the patent family members relating to the patent documents cited in the above-mentioned European search report. The members are as contained in the European Patent Office EDP file on
The European Patent Office is in no way liable for these particulars which are merely given for the purpose of information.

29-01-2026

| Patent document cited in search report | Publication date | Patent family member(s) | Publication date |
|---|---|---|---|
| JP 2002155129 A | 28-05-2002 | JP 4037603 B2 | 23-01-2008 |
| | | JP 2002155129 A | 28-05-2002 |
| US 2009309915 A1 | 17-12-2009 | JP 5197175 B2 | 15-05-2013 |
| | | JP 2009298079 A | 24-12-2009 |
| | | US 2009309915 A1 | 17-12-2009 |
| JP 2014097667 A | 29-05-2014 | JP 5846231 B2 | 20-01-2016 |
| | | JP 2014097667 A | 29-05-2014 |
| US 2003159773 A1 | 28-08-2003 | KR 20040029939 A | 08-04-2004 |
| | | KR 20070104681 A | 26-10-2007 |
| | | KR 20080047488 A | 28-05-2008 |
| | | TW I245791 B | 21-12-2005 |
| | | TW I332521 B | 01-11-2010 |
| | | TW 200948921 A | 01-12-2009 |
| | | US 2003159773 A1 | 28-08-2003 |
| | | WO 0174962 A1 | 11-10-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024173299 A
- JP 2017035809 A


### Non-patent literature cited in the description


- *CHEMICAL ABSTRACTS*, 56602-77-8
- *CHEMICAL ABSTRACTS*, 123-07-9
- *CHEMICAL ABSTRACTS*, 3228-02-2
- *CHEMICAL ABSTRACTS*, 89-83-8
- *CHEMICAL ABSTRACTS*, 69178-41-2
- *CHEMICAL ABSTRACTS*, 119-84-6
- *CHEMICAL ABSTRACTS*, 501-94-0
- *CHEMICAL ABSTRACTS*, 9046-10-0
- *CHEMICAL ABSTRACTS*, 19900-72-2
- *CHEMICAL ABSTRACTS*, 1760-24-3